# EUROPÄISCHE PATENTSCHRIFT

(11) **EP 3 515 827 B1**
(45) Veröffentlichungstag und Bekanntmachung des Hinweises auf die Patenterteilung: **17.02.2021**
(21) Anmeldenummer: 17751412.2
(22) Anmeldetag: 11.08.2017
(51) Int. Cl.: B65B 41/18, B65B 61/00, B65B 61/02, B65B 61/14, B65D 71/06, B65D 71/08, B65D 71/28, B26F 3/12, B26D 7/10, B23K 26/36, B26D 7/08, B26F 1/38, B26F 1/40, B26D 7/18, B26F 1/10, B65B 41/12, B65B 59/00, B65B 65/00, B65B 27/04, B23K 103/00, B26D 1/00, B23K 101/16

(54) **VORRICHTUNG UND VERFAHREN ZUR HERSTELLUNG VON GEBINDEN MIT TRAGEGRIFFEN**
DEVICE AND METHOD FOR PRODUCING MULTIPACKS HAVING CARRYING HANDLES
DISPOSITIF ET PROCÉDÉ POUR L'OBTENTION DE LOTS DE PRODUITS POURVUS DE POIGNÉES DE TRANSPORT

(30) Priorität: 19.09.2016 DE 102016217896
(43) Veröffentlichungstag der Anmeldung: 31.07.2019
(73) Patentinhaber: Krones Aktiengesellschaft, 93073 Neutraubling (DE)
(72) Erfinder: KIESLINGER, Manfred, 93073 Neutraubling (DE); ELSPERGER, Stefan, 93073 Neutraubling (DE)
(74) Vertreter: Benninger, Johannes
(86) Internationale Anmeldenummer: PCT/EP2017/070469
(87) Internationale Veröffentlichungsnummer: WO 2018/050376

(56) Entgegenhaltungen:
- EP-A1- 2 589 545
- WO-A1-2012/152501
- WO-A1-2015/107484
- DE-A1- 10 221 102
- DE-A1- 10 320 390
- DE-A1-102011 055 141
- DE-A1-102014 113 257
- US-A- 3 618 439

## Beschreibung

Die vorliegende Erfindung betrifft eine Vorrichtung zur Herstellung von Gebinden mit Tragegriff mit den Merkmalen des unabhängigen Anspruchs 1 sowie ein Verfahren zur Herstellung solcher Gebinde mit den Merkmalen des unabhängigen Verfahrensanspruchs 10.

Zum Zwecke des Transports werden Getränkebehälter meist in handlichen Gebinden mit beispielsweise vier, sechs oder mehr Behältern zusammengefasst, wobei die Behälter in diesen Gebinden bspw. mit Schrumpffolie umhüllt und zusammengehalten sein können. Zur leichteren Handhabung weisen Gebinde mit solchen sog. Einweg-Sekundärverpackungen aus PE-Schrumpffolie o. dgl. oftmals Tragegriffe aus flexiblem Material auf, die bspw. aus ausreichend stabiler Folie, Karton, Papier, Kunststoffen wie PVC oder Mischwerkstoffen gefertigt sein können. Wahlweise können solche Tragegriffe zudem mit einem papier- und/oder kartonverstärktem Griffbereich ausgestattet sein. Die Tragegriffstreifen können mit ihren Enden an den Seitenflächen des Gebindes fixiert sein, bspw. durch Verschweißen oder Verkleben. Hierzu können die Enden des Tragegriffs ggf. selbstklebende Bereiche aufweisen.

Damit eine solche Anordnung eine ausreichende mechanische Stabilität bei der manuellen Handhabung der Gebinde aufweist, muss nicht nur der Tragegriff über die erforderliche Belastbarkeit verfügen, sondern auch die Verbindungsstellen zum Gebinde und dessen Umhüllung, an der der Tragegriff fixiert ist. D.h., die umhüllende Schrumpffolie muss über eine ausreichende Dehn- und Reißfestigkeit verfügen, damit bei Handhabung des Gebindes mittels des Tragegriffs nicht die Verpackungsfolie überdehnt werden und/oder ausreißen kann. Da mit zunehmenden Maßnahmen zur Kostenreduzierung und im Interesse einer Ressourcenschonung in der Praxis immer dünnere Verpackungsfolien mit Folienstärken von 25 µm oder weniger zum Einsatz kommen, gelangt die mechanische Belastbarkeit der verwendeten Folien in kritische Bereiche. Um das Ausreißen der Tragegriffe bei Gebinden mit insgesamt sechs PET-Getränkebehältern von jeweils 1,5 Litern zuverlässig zu verhindern, sind in der Regel Folienstärken von wenigstens 40 µm erforderlich. Ansonsten kann die Situation entstehen, dass die mit derart dünnen Folien hergestellten Folienschrumpfgebinde für eine maschinelle Verarbeitung sowie ggf. auch für eine weitere Handhabung und/oder einen Transport noch stabil genug sind, jedoch dem weiteren Handling durch den Kunden - etwa beim Tragen der Gebinde am Tragegriff - nicht mehr standhalten und an den Verbindungsstellen zwischen Tragegriff und Folienumhüllung ausreißen. Aus einer Verstärkungsmaßnahme, bei der dickere Folien verwendet werden, resultiert jedoch ein Mehreinsatz an Folienmaterial von etwa 60 Gewichtsprozent gegenüber der ansonsten verwendbaren dünneren Folie, der ausschließlich dadurch bedingt ist, dass die Folie an den und im Umgebungsbereich der Verbindungsstellen zum Tragegriff über eine ausreichende mechanische Stabilität für die Handhabung der Gebinde verfügt.

Die DE 693 11 338 T2 offenbart eine Mehrfachpackung für Behälter, insbesondere für Getränkebehälter in einer einheitlichen Gruppe, bei der die Behälter mittels einer Banderole aus Kunststoff zusammengehalten sind. Ein flexibler Tragegriff ist an den Außenseiten der Mehrfachpackung fixiert, wobei die Verbindungsstellen jeweils einen Bereich bilden und überdecken, in dem die Tragegriffenden sowohl an der Banderole als auch an den Behältermantelflächen fixiert sind.

Die WO 98/07635 offenbart eine Gebindeanordnung mit zwei, drei oder mehr mittels eines als Halteband fungierenden Etiketts zusammengehaltenen Behältern oder Flaschen. Das Band kann einen Handgriff ausgebildet haben, so dass das Gebinde getragen werden kann. Als Stärke des Bandes wird ein Bereich zwischen 8 und 100 µm angegeben.

Die in der DE 102 11 996 A1 beschriebene Vorrichtung zum Anbringen von selbstklebenden Tragegriffen auf Tragepackungen fördert ein Endlosband zu einem Applizierwerkzeug, an dem das Endlosmaterial in jeweils passende Abschnitte unterteilt und abgetrennt wird, wonach es mittels Rotorarmen an Stirnseiten der jeweiligen Tragepackungen angedrückt wird.

Eine weitere Gebindeanordnung mit sechs oder mehr durch Schrumpffolie zusammengehaltenen Getränkedosen geht aus der WO 2008/052211 A2 hervor. Die Schrumpffolie besteht aus zwei Lagen, die an mehreren Stellen quer zur Längsrichtung zusammengeheftet sind, dass jeweils sechs oder mehr schlauchförmige Abschnitte gebildet sind, in welche die Getränkedosen eingeschoben werden können. Anschließend werden die Folienabschnitte voneinander getrennt, so dass Gebinde entstehen, die danach durch einen Schrumpfofen geführt werden, wodurch die Dosen fest aneinander fixiert werden. Eine Variante des Gebindes sieht einen nach oben ragenden Handgriffabschnitt vor, der Teil der Folienabschnitte ist, so dass eine Klebe- oder Schweißverbindung entfällt.

Ein Gebinde mit Tragegriff, ein Verfahren sowie eine Vorrichtung zur Herstellung eines solchen Gebindes sind zudem in der EP 2 589 545 A1 sowie auch in der DE 10 2011 054 994 A1 offenbart. Das durch diese Dokumente bekannt gewordene Gebinde umfasst mindestens zwei Artikel, die mittels einer Schrumpffolie, Banderole oder dgl. Umverpackung zumindest teilweise umhüllt und zusammengehalten sind. Ein die Oberseite des Gebindes übergreifender Tragegriff ist derart über Kontaktstellen am Gebinde fixiert, dass alle beim Tragen des Gebindes am Tragegriff auftretenden Zugkräfte weitestgehend vom Tragegriff über die Kontaktstellen auf Außenseiten von zwei unterschiedlichen Artikeln geleitet sind. Die Kontaktstellen durchgreifen Aussparungen, die in der Umverpackung angeordnet sind, so dass der Tragegriff direkt an den Artikeln fixiert ist, ggf. unter Einbeziehung der Umverpackung, die gleichzeitig an den Kontaktstellen mit dem Tragegriff sowie mit den Außenseiten der Artikel verbunden sein kann. Die Kontaktstellen können durch Klebestellen oder durch Schweißstellen gebildet sein.

Ein vorrangiges Ziel der Erfindung wird darin gesehen, eine einfach aufgebaute und prozesssicher zu betreibende Vorrichtung zur Herstellung von Gebinden mit Tragegriffen zur Verfügung zu stellen, bei welchen der Tragegriff durch eine Aussparung und/oder Lochung einer Umverpackung oder Folie hindurch direkt an den Außenseiten der Artikel appliziert wird. Weiterhin soll ein entsprechendes Verfahren zur Herstellung solcher Gebinde zur Verfügung gestellt werden, bei dem/denen trotz Verwendung einer möglichst dünnen Folie oder Umverpackung eine ausreichende mechanische Stabilität im Zusammenhang mit der Fixierung der Tragegriffenden an den Gebindeaußenseiten gewährleistet werden kann. Auch das Verfahren soll mit wenig Aufwand eine hohe Prozesssicherheit gewährleisten können.

Die genannten Ziele der Erfindung werden mit den Gegenständen der unabhängigen Ansprüche erreicht. Merkmale vorteilhafter Weiterbildungen der Erfindung ergeben sich aus den jeweiligen abhängigen Ansprüchen. So schlägt die Erfindung zur Erreichung der genannten Ziele eine Vorrichtung zur Herstellung von Gebinden mit Tragegriffen vor, die zumindest eine Transportstrecke zur Beförderung von Artikelgruppen und ein Folieneinschlagmodul umfasst. Das Folieneinschlagmodul dient der zumindest teil- oder abschnittsweisen Umhüllung der Artikelgruppen mit einer von einem Folienvorrat zugeführten, dehn- und/oder unter Wärme schrumpfbaren Folie zur Bildung von Foliengebinden, die mit Aussparungen an wenigstens zwei gegenüber liegenden Seitenflächen der Gebinde versehen sind. Zudem umfasst die erfindungsgemäße Vorrichtung eine Applikationseinrichtung zur Aufbringung von Tragegriffen unter Fixierung der Tragegriffenden an Artikelmantelflächen im Bereich der Aussparungen mittels Klebe- und/oder Schweißverbindungen unter Durchdringung und/oder unter Herstellung einer haftenden Verbindung mit der schrumpfbaren Folie. Die Vorrichtung sieht vor, dass zwischen dem Folienvorrat und dem Folieneinschlagmodul eine steuerbare Schneidvorrichtung und/oder Stanzvorrichtung und/oder eine Lochungs- oder Lochbildungsvorrichtung zur Einbringung der Aussparungen in die zum Folieneinschlagmodul beförderte Folie angeordnet ist.

Bei der Herstellung der erforderlichen Lochungen und/oder Aussparungen ist bei der vorliegenden Erfindung unter anderem darauf zu achten, dass für die Anwendung des neuen Tragegriffkonzepts die Abstände - in Längsrichtung bzw. in Transportrichtung der Folie - der erforderlichen Aussparungen in der Folienbahn nicht gleich sein müssen. Vielmehr sollte eine Art Muster erzeugt werden, damit sich auf jedem späteren Folienzuschnitt, d.h. in der Packmaschine bzw. im Folieneinschlagmodul, jeweils zwei Aussparungen mit einem bestimmten Abstand und einer bestimmten Position zum Folientrennschnitt befinden. Auf diese Weise kann ein Lochbild mit abwechselnd kürzeren und längeren Lochabständen erzeugt werden. Diese Aussparungen müssen je nach Bedarf einmalig oder mehrmalig pro Folienbahn erzeugt werden. Bei sog. Mehrfachnutzen können sich gleichartige Lochmuster oder Lochbilder auf parallelen Abschnitten einer einzigen Folienbahn befinden, die später in Längsrichtung unterteilt wird, um in mehreren parallelen Verpackungsstraßen zur Herstellung der Gebinde eingesetzt zu werden. Die Anzahl der erforderlichen Lochreihen ist abhängig von der späteren Verwendung (ein-, zwei- oder dreibahnige Verarbeitung in der Packmaschine). In jedem Fall muss die Lochung in einem exakten Abstand (quer zur Laufrichtung) erzeugt werden.

Die notwendigen Aussparungen können durch unterschiedliche Verfahren hergestellt werden. Die Löcher oder Aussparungen können grundsätzlich die unterschiedlichsten Konturen aufweisen; so sind rechteckige Aussparungen, rechteckige Aussparungen mit gerundeten Ecken, ovale Aussparungen, kreisförmige oder eine andere Geometrie aufweisende Aussparungen möglich. Bevorzugt werden die Aussparungen während des kontinuierlichen Folientransports geschnitten bzw. eingebracht, um einen leistungsmindernden Stopp-and-Go-Betrieb zu vermeiden. Gewisse Geschwindigkeitsschwankungen, die evtl. während des Herstellungsprozesses auftreten, könnten durch eine Detektion der aktuellen Foliengeschwindigkeit und einer darauf abgestimmten Steuerung der steuerbaren Schneid-, Stanz- und/oder Lochungsvorrichtung kompensiert werden, indem der Schnitt- oder Stanz- oder Lochungszeitpunkt der optimalen Position angepasst wird. Bei allen Schnittverfahren ist es notwendig, dass die ausgeschnittenen Abfälle durch eine Absaugung entsorgt werden. Bei den nachfolgend beschriebenen thermischen Verfahren, die bspw. mittels Laserschnittverfahren oder mittels erhitzter Drahtschlaufen o. dgl. arbeiten können, wird der Lochrand auch noch verstärkt, da sich durch die Temperatur ein kleiner Wulst an der Schnittkante bildet. Bei den thermischen Verfahren können entstehende Dämpfe vorzugsweise über eine geeignete Absaugvorrichtung entfernt werden.

Bei dieser steuerbaren Schneidvorrichtung kann es sich beispielsweise um eine mechanische bzw. mechanisch bewegliche Schneidvorrichtung handeln, die mittels einer geeigneten Klinge, einem Heizdraht o. dgl. Aussparungen in gewünschter Größe und an den jeweils gewünschten Stellen in die Umverpackung bzw. in die Folie einbringt.

Es kann sich bei der steuerbaren Schneid-, Stanz- und/oder Lochungsvorrichtung jedoch auch konkret um eine Stanzvorrichtung mit oszillierendem oder rotierendem Stanzwerkzeug handeln, die der Einbringung der Aussparungen in die Folienbahnen oder -abschnitte dient. Wahlweise können auch mehrere solcher Stanzvorrichtungen parallel angeordnet sein, um mehrere parallele Lochreihen oder Reihen mit Aussparungen in die Folienbahnen einzubringen, wobei diese Folienbahnen bspw. für einen mehrbahnigen Folientransport nach dem Einbringen der Aussparungen und vor oder nach dem Ablängen in benötigte Folienabschnitte in mehrere Bahnen zerteilt werden können. Bei einer Ausbildung der steuerbaren Schneid-, Stanz- und/oder Lochungsvorrichtung als Stanzvorrichtung kann vorgesehen sein, dass das mindestens eine rotierende Stanzwerkzeug der steuerbaren Stanzvorrichtung mit variabel steuerbarer Relativgeschwindigkeit zur Fördergeschwindigkeit der transportierten Folie rotierbar ist. Auf diese Weise können insbesondere unterschiedliche Abstände der Aussparungen voneinander realisiert werden. Hierzu kann bspw. ein Stanzzylinder nicht immer synchron zur Folienbahn ausfahren, wobei jedoch kurz vor dem Stanzvorgang der Stanzzylinder mit der Foliengeschwindigkeit synchronisiert werden muss. Diese Synchrongeschwindigkeit muss während des gesamten Stanzschnittes aufrecht erhalten bleiben. So ist insbesondere sicherzustellen, dass während jedes Stanzvorganges, bei dem das Stanzwerkzeug senkrecht zur Folienoberfläche in diese eintaucht, keine Geschwindigkeitsunterschiede zwischen der Umfangsgeschwindigkeit des rotierenden Stanzwerkzeuges und der Förder- oder Vorschubgeschwindigkeit der Folienbahnen herrschen, da ansonsten keine sauberen Stanzvorgänge zu gewährleisten sind.

Je nach Erfordernis der benötigten Lochreihen kann die Stanzwalze der rotierenden Stanzvorrichtung die geeignete Anzahl von Stanzwerkzeugen oder Stanzzylinder quer zur Folienlaufbahn im richtigen Abstand auf weisen. Weiterhin kann eine sinnvolle Variante durch eine Stanzvorrichtung gebildet sein, bei der eine Anzahl der Lochreihen und ein Lochabstand variierbar sind.

Als Werkzeug zur Herstellung der gewünschten Aussparungen eignet sich besonders die erwähnte Rotationsstanze. Bei einer solchen werden die Löcher durch geeignete Stanzwerkzeuge erstellt, die sich auf einem Stanzzylinder befinden. Das Stanzwerkzeug drückt sich während des Stanzvorgangs gegen einen Gegendruckzylinder ab, oder taucht in eine Matrize, die sich in der synchron laufenden Gegenwalze befindet. Die Abstände in Folienbahnrichtung sind vom Getränkegebinde abhängig und müssen deshalb variabel zu erstellen sein.

Bei allen hier beschriebenen Varianten eines thermischen Schneidens mit einem erhitzten Werkzeug muss das jeweils eingesetzte Werkzeug beim Eintauchen in die sich bewegende Folienbahn auf deren Fördergeschwindigkeit abgestimmt werden, was teilweise durch sog. Aufsynchronisieren des Werkzeuges mit der bzw. auf die Fördergeschwindigkeit der Folienbahn erfolgen kann. Zudem macht das Werkzeug bei der Herstellung der Aussparungen eine reversierende Bewegung. Das Formwerkzeug kann beispielsweise durch eine erhitzte Drahtschlaufe gebildet sein, die in ihrer Kontur der Außenkontur der herzustellenden Aussparungen entspricht, wobei der ausgesparte Folienrest z.B. per Absaugung entsorgt werden müsste. Alternativ dazu könnte das Formwerkzeug auch vollflächig ausgestaltet und beheizt werden. In diesem Fall würde sich das Folienmaterial durch Erhitzen und anschließendes Schrumpfen als Wulst am Rand der Aussparung ansammeln. Der Vorteil dieser Methode wäre, dass kein Folienabfall entsorgt werden müsste. Des Weiteren wäre diese Variante für den Fall von Vorteil, dass der Henkel erst nach dem Schrumpftunnel appliziert und die durch den Wulst verstärkte Folienaussparung beim Durchlaufen der mit Folie umhüllten Gebinde oder Artikelgruppierungen im Schrumpftunnel entsprechend formstabil bleiben würde.

Anstelle eines mechanischen Stanzwerkzeuges kann die steuerbare Schneid-, Stanz- und/oder Lochungsvorrichtung wahlweise auch mindestens eine Ultraschall-Sonotrode o. dgl. zum Einbringen der Aussparungen in die Folienbahnen oder -abschnitte umfassen. So können die benötigten Aussparungen auch mittels geeigneten Ultraschall-Sonotroden in die Folienbahn geschnitten werden. Um die Schnitte in der richtigen Position zu erzeugen, müssen die Schnittwerkzeuge - gekoppelt über eine geeignete Steuerung - an der richtigen Stelle aufsynchronisiert werden, um anschließend den Schnitthub durchzuführen. Die Schneidaggregate müssten in Laufrichtung eine reversierende Bewegung ausführen, um wieder an den Startpunkt zurückzukehren.

Ebenso denkbar ist eine Variante, bei der die steuerbare Schneid-, Stanz- und/oder Lochungsvorrichtung mindestens eine Laserschneidvorrichtung zum Einbringen der Aussparungen in die Folienbahnen oder -abschnitte umfasst. So können bei einer solchen Variante über oder unter der Folienbahn in geeigneter Anzahl Laser-Schneidgeräte angeordnet sein, die bei Bedarf auch breitenverstellbar sein können, um damit die Aussparungen auszuschneiden. Die Laserschneidvorrichtung kann bspw. über eine Art X-Y-Schlitten verfahren werden, um die gewünschten Aussparungen zu erzeugen. Bevorzugt wird der Laserstrahl jedoch mit einem verstellbaren Spiegel auf die geeignete Position gelenkt.

Wahlweise können bei dieser erfindungsgemäßen Vorrichtung die dem Folieneinschlagmodul zugeführten Folienabschnitte von einem Endlos-Folienvorrat entnommen sein und vor ihrer Zuführung zum Folieneinschlagmodul die steuerbare Schneid-, Stanz- und/oder Lochungsvorrichtung zum Einbringen der Aussparungen durchlaufen. Die Trennung der endlos beförderten und dem Folieneinschlagmodul zugeführten Folienbahn in einzelne Abschnitte, welche die Umverpackung jeweils eines Gebindes bildet, kann vor dem Einbringen in das Folieneinschlagmodul und vor dem Einbringen der Aussparungen oder nach dem Einbringen der Aussparungen erfolgen. Ebenso denkbar ist es, dass die dem Folieneinschlagmodul zugeführten Folienabschnitte als einzelne Abschnitte definierter Länge befördert werden und vor ihrer Zuführung zum Folieneinschlagmodul die Schneid-, Stanz- und/oder Lochungsvorrichtung zum Einbringen der Aussparungen durchlaufen. Hierbei kann die Förderung der Umverpackung durch Förderung bereits passend abgelängter Folienabschnitte erfolgen.

Erfindungsgemäß ist die Vorrichtung zur Herstellung der mit Tragegriffen ausgestatteten Gebinde so aufgebaut, dass der steuerbaren Schneid-, Stanz- und/oder Lochungsvorrichtung eine Aufnahme- und/oder Sammeleinrichtung zur Erfassung, Aufnahme und/oder zum Sammeln von herausgeschnittenen Folienabschnitten zugeordnet ist. Diese Aufnahme- und/oder Sammeleinrichtung kann wahlweise eine der steuerbaren Schneid-, Stanz- und/oder Lochungsvorrichtung zugeordnete Absaugeinrichtung zur Erfassung und Beförderung der herausgeschnittenen Folienabschnitte aufweisen, welcher im Interesse einer hohen Prozesssicherheit dafür sorgt, dass die herausgeschnittenen Folienabschnitte, die durch das schneidende Einbringen der Aussparungen in die Folie entstanden sind, von der Folie entfernt werden, bevor diese zum Folieneinschlagmodul weitertransportiert wird.

Wahlweise jedoch kann die Aufnahme- und/oder Sammeleinrichtung auch ein der steuerbaren Schneid-, Stanz- und/oder Lochungsvorrichtung zugeordnetes Gebläse zur Erfassung und/oder Entfernung und/oder Beförderung der herausgeschnittenen Folienabschnitte aufweisen, das ggf. mit einer entfernt davon angeordneten Absaugeinrichtung kombiniert werden kann, die für eine zuverlässige Erfassung und Entsorgung der herausgeschnittenen Folienabschnitte sorgen kann.

Vorzugsweise ist die steuerbare Schneid-, Stanz- und/oder Lochungsvorrichtung zur Herstellung der Aussparungen im Förderprozess der Folie in Querrichtung zur Transport- und/oder Vorschubrichtung der Folie bzw. der Umverpackung bei deren Zuführung zu den Artikeln bewegbar. So kann die Schneid-, Stanz- und/oder Lochungsvorrichtung bspw. quer zur Folie in deren Transportbahn eintauchen, wodurch die gewünschte Aussparungsgröße und/oder -länge herstellbar ist. Wie erwähnt, kann es sich bei der Schneidvorrichtung um eine mechanische bzw. mechanisch bewegliche Schneidvorrichtung handeln, die mittels einer geeigneten Klinge, einem Heizdraht o. dgl. Aussparungen in gewünschter Größe und an den jeweils gewünschten Stellen in die Umverpackung bzw. in die Folie einbringt. Die Schneidvorrichtung bzw. deren Klinge taucht hierbei sinnvollerweise in etwa senkrecht zur Vorschubrichtung in die Folienbahn oder Umverpackungsbahn ein, bevor diese zum Folieneinschlagmodul gefördert wird.

Erfindungsgemäß ist die Vorrichtung zur Herstellung der mit Tragegriffen ausgestatteten Gebinde so aufgebaut, dass die steuerbare Schneidvorrichtung durch eine bogenförmige Klinge gebildet ist, die in etwa quer zur Transport- und/oder Vorschubrichtung der Folie bewegbar ist und bei der Einbringung der Aussparungen Folienabschnitte herausschneidet. Die Kontur der Klinge, ihre Bogenbreite, ihre Eintauchtiefe sowie die Zeitdauer des Eintauchens in Bezug auf die Fördergeschwindigkeit der Folienbahn definieren die Kontur, Breite und Länge der jeweiligen Aussparungen, die später bei Anbringen des Tragegriffs die Größe und auch die Stabilität der Kontaktstellen zwischen den Tragegriffenden und den Außenmantelflächen der kontaktierten Artikel beeinflussen, weshalb auch eine gewisse Mindestgröße der mechanisch mittels der Schneidvorrichtung eingebrachten Aussparungen in der Folienbahn erforderlich ist.

Die steuerbare Schneidvorrichtung bzw. die bogenförmige Klinge kann wahlweise einen Heizdraht umfassen bzw. durch einen Heizdraht gebildet sein. Dieser Heizdraht ist während des Schneidens mit Hitze beaufschlagt und kann in schneller Folge die Umverpackung in gewünschter Weise schneiden und mit den Aussparungen versehen. Ein solcher Heizdraht kann bspw. als elektrischer Heizleiter ausgebildet sein, der durch Beaufschlagung mit elektrischem Strom auf eine gewünschte Heiztemperatur gebracht werden kann, so dass sich die Folie gut schneiden lässt.

Eine bevorzugte Variante der erhitzten Drahtschlaufe, die bspw. durch einen U-förmig gebogenen Draht gebildet sein kann, kann etwa in folgender Konfiguration bestehen. Die Breite der als Werkzeug eingesetzten Drahtschlaufe ergibt die Breite der späteren Aussparung in der Folie. Die heiße Drahtschlaufe könnte während der Folienbewegung in einer senkrechten Bewegung zum Folientransport oder wahlweise in einem von 90° abweichenden Winkel in die Folienbahn schneiden. Die Drahtschlaufe führt dabei nur eine Z-förmige Bewegung aus. Der in etwa rechteckige Ausschnitt wird dadurch erzeugt, dass sich die Folienbahn während des Eintauchens der Drahtschlaufe weiter bewegt, während die Drahtschlaufe in der Folienebene steht. Sobald die gewünschte Aussparungslänge erreicht ist, wird die Drahtschlaufe wieder aus der Folienebene gezogen und schneidet dabei den erzeugen Folienlappen ab, der als Abfall entnommen bzw. abgesaugt werden kann. Das Abschneiden kann dadurch erleichtert werden, dass eine ortsfeste Absaugdüse in geeigneter Position, insbesondere unmittelbar neben der Drahtschlaufe positioniert wird. Diese Düse saugt den entstehenden Folienlappen an und dient beim Abtrennen des Lappens bei der herausfahrenden Drahtschlaufe als Widerlager, da er den Lappen mit der Saugkraft festhält. Zum anderen kann mit dieser Saugdüse auch gleichzeitig der Folienabfall entsorgt und bspw. einem Sammelbehälter zugeführt werden.

Eine weitere Variante der Vorrichtung kann zudem vorsehen, dass die erfindungsgemäße Vorrichtung zur Herstellung der mit Tragegriffen ausgestatteten Gebinde mehrere parallele Transportstrecken, Folieneinschlagmodule und jeweils diesen zugeordnete Schneid-, Stanz- und/oder Lochungsvorrichtungen zur Einbringung der Aussparungen in jede der parallelen Folienbahnen umfasst. Auf diese Weise ist ein mehrbahniger Betrieb mit mehreren parallelen Transportstrecken, Schneid-, Stanz- und/oder Lochungsvorrichtungen und Folieneinschlagmodulen ermöglicht.

Dem Folieneinschlagmodul ist vorzugsweise das Applikationsmodul für den Tragegriff nachgeordnet oder wahlweise auch diesem vorgeordnet. Dieses Applikationsmodul dient der Anbringung und Fixierung des Tragegriffs an den Aussparungen zugeordneten und/oder diese durchgreifenden Kontaktstellen an den Außenseiten der Umverpackungsfolie, welche die umhüllten Artikel überspannt. Wahlweise kann vorgesehen sein, dass das Applikationsmodul die Gebinde jeweils um ca. 90° oder 270° um eine Hochachse dreht, wobei der Tragegriff unter Kontaktierung der mit Aussparungen versehenen, in Förderrichtung vorder- und rückseitig angeordneten Gebindeaußenseiten applizierbar ist.

Außerdem kann in einer weiteren sinnvollen Variante der erfindungsgemäßen Vorrichtung das Applikationsmodul zur Sicherstellung einer Positionierung der Tragegriffe an den korrespondierenden Aussparungen mit der steuerbaren Schneid-, Stanz- und/oder Lochungsvorrichtung gekoppelt und/oder synchronisiert werden, so dass je nach Gebindegröße und/oder Tragegrifflänge bzw. den Abständen der Applikationsstellen der Enden der jeweiligen Tragegriffe unterschiedliche Lochabstände oder Abstände der Aussparungen jeweils eines Folienabschnittes voneinander einstellbar sind.

Zur Erreichung des oben genannten Ziels schlägt die Erfindung weiterhin ein Verfahren zur Herstellung von Gebinden mit Tragegriff vor, bei dem in regelmäßiger und/oder ununterbrochener Folge für jedes herzustellende Gebinde wenigstens zwei Artikel mittels einer Schrumpffolie, Banderole o. dgl. Umverpackung zumindest teilweise umhüllt und zusammengehalten und mechanisch aneinander fixiert und/oder zusammengefasst werden, wonach der Tragegriff mittels Klebe- und/oder Schweißverbindungen an Kontaktstellen an Mantelflächen von wenigstens zwei unterschiedlichen Artikeln des Gebindes fixiert wird. Bei dem Verfahren ist vorgesehen, dass sich die Kontaktstellen zumindest teilweise mit Aussparungen in der Umverpackung decken. Außerdem sieht das Verfahren vor, dass die Aussparungen während der Handhabung der Umverpackung, bei ihrem Transport zu einer Umhüllungsstation oder einem Folieneinschlagmodul und/oder bei der Zuführung der Umverpackung zu den zu umhüllenden Artikeln mittels einer steuerbaren Schneid-, Stanz- und/oder Lochungsvorrichtung eingebracht werden, wobei herausgeschnittene Umverpackungsabschnitte von der Umverpackung getrennt und entfernt oder aufgenommen und gesammelt werden.

Bei dem Verfahren ist vorgesehen, dass die Umverpackung durch jeweils einen Schneidvorgang bzw. durch Schneidvorgänge mittels der steuerbaren Schneid-, Stanz- und/oder Lochungsvorrichtung jeweils mit Aussparungen versehen wird, dass danach die Artikel mit der Umverpackung umhüllt werden und anschließend der Tragegriff unter Kontaktierung der Aussparungen auf die Mantelflächen der Artikel appliziert wird.

Die steuerbare Schneid-, Stanz- und/oder Lochungsvorrichtung, die der Herstellung der Aussparungen dient, taucht im Förderprozess der Umverpackung vorzugsweise in etwa quer zu deren Transport- und/oder Vorschubrichtung ein und schneidet dadurch die Aussparungen heraus. Die steuerbare Schneid-, Stanz- und/oder Lochungsvorrichtung kann beispielsweise durch eine bogenförmige Klinge gebildet sein, die in etwa quer zur Transport- und/oder Vorschubrichtung der Umverpackung eintaucht und bei der Einbringung der Aussparungen Umverpackungsabschnitte herausschneidet. Zudem kann die steuerbare Schneidvorrichtung beheizbar sein und die Umverpackung während des Schneidens mit Hitze beaufschlagen.

Ebenso denkbar ist es, dass die Aussparungen mittels einer Stanzvorrichtung mit oszillierendem oder rotierendem Stanzwerkzeug in die Folienbahnen oder -abschnitte eingebracht werden. Hierbei kann vorgesehen sein, dass das mindestens eine rotierende Stanzwerkzeug der steuerbaren Stanzvorrichtung mit variabel steuerbarer Relativgeschwindigkeit zur Fördergeschwindigkeit der transportierten Folie rotiert, so dass unterschiedliche Abstände der Aussparungen voneinander einstellbar sind. Allerdings ist sicherzustellen, dass während jedes Stanzvorganges, bei dem das Stanzwerkzeug senkrecht zur Folienoberfläche in diese eintaucht, keine Geschwindigkeitsunterschiede zwischen der Umfangsgeschwindigkeit des rotierenden Stanzwerkzeuges und der Förder- oder Vorschubgeschwindigkeit der Folienbahnen herrschen, da ansonsten keine sauberen Stanzvorgänge zu gewährleisten sind.

Eine alternative Variante des Verfahrens sieht vor, dass die Aussparungen auch mittels mindestens einer Ultraschall-Sonotrode in die Folienbahnen oder -abschnitte eingebracht werden können. Ebenso denkbar sind Verfahrensvarianten, bei denen die Aussparungen mittels mindestens einer Laserschneidvorrichtung in die Folienbahnen oder -abschnitte eingebracht werden.

Weiterhin kann das Verfahren vorsehen, dass die herausgeschnittenen Umverpackungsabschnitte mittels Unterdruck einer der steuerbaren Schneid-, Stanz- und/oder Lochungsvorrichtung zugeordneten Absaugeinrichtung erfasst und aufgenommen und/oder einer Sammelstelle zugeführt werden.

Wahlweise kann der steuerbaren Schneid-, Stanz- und/oder Lochungsvorrichtung auch ein Gebläse zugeordnet sein, das herausgeschnittene Umverpackungsabschnitte mittels Überdruck von der Schneid-, Stanz- und/oder Lochungsvorrichtung und/oder der weiterbeförderten Umverpackung entfernt. Dieses Gebläse kann ggf. kombiniert sein mit einer entfernten Absaugeinrichtung, die für die Sammlung, Erfassung und/oder Entsorgung der Umverpackungsabschnitte sorgen kann.

Auch das Verfahren zur Herstellung der Gebinde kann gleichermaßen einen mehrbahnigen Betrieb ermöglichen, wobei mehrere parallele Schneidvorrichtungen in mehrbahnigem Betrieb mehrerer parallel geförderter Umverpackungsbahnen eingesetzt werden können.

Eine weitere Verfahrensvariante sieht vor, dass eine der Umhüllungsstation oder dem Folieneinschlagmodul vorgeordnete Folientrennstation zur Herstellung von abgelängten Folienbahnen zur Umhüllung jeweiliger Artikelgruppen hinsichtlich der Steuerung der Folientrennung mit der steuerbaren Schneid-, Stanz- und/oder Lochungsvorrichtung gekoppelt ist, was insbesondere zur Abstimmung der Abstände der in die Folie eingebrachten Aussparungen und/oder zur Abstimmung einer exakten Folientrennposition sinnvoll oder notwendig sein kann. Weiterhin kann vorgesehen sein, dass eine der Umhüllungsstation oder dem Folieneinschlagmodul in Folientransportrichtung nachgeordnete oder vorgeordnete Applikationseinrichtung zur Anbringung der Tragegriffe an die Gebinde hinsichtlich der Positionierung von Tragegriffenden der Tragegriffe an den Kontaktstellen und/oder Aussparungen der Gebinde mit der steuerbaren Schneid-, Stanz- und/oder Lochungsvorrichtung gekoppelt ist, insbesondere zur Abstimmung der Abstände der in die Folie eingebrachten Aussparungen. Wie bereits oben erwähnt, können damit die exakten Positionen der in die Folienabschnitte eingebrachten Aussparungen auf ggf. unterschiedliche Gebindegrößen und/oder auf unterschiedliche Tragegrifflängen und damit auf ggf. unterschiedlich zu positionierende Tragegriffenden mit ihren jeweiligen Applikationsstellen abgestimmt werden.

Wahlweise kann das Verfahren zur Herstellung der mit Tragegriffen auszustattenden Gebinde in einer Weise ausgestaltet sein, dass durch die mittels der Klebestellen und/oder Schweißstellen zwischen den Mantelflächen der wenigstens zwei unterschiedlichen Artikel und dem Tragegriff jeweils gebildeten Kontaktstellen, die sich zumindest teilweise mit Aussparungen in der Umverpackung decken, die Umverpackung haftend und zugkraftübertragend mit dem Tragegriff sowie mit den Mantelflächen der wenigstens zwei unterschiedlichen Artikel verbunden wird.

Das Verfahren sieht außerdem vor, dass sich die Kontaktstellen zumindest teilweise mit Aussparungen in der Umverpackung decken und die Umverpackung durchdringen und/oder durch diese hindurchgreifen. Außerdem kann es von Vorteil sein, wenn sich an wenigstens einer der Kontaktstellen die Klebe- und/oder Schweißverbindung auf die Umverpackung erstreckt und diese miteinbezieht. Auf diese Weise kann ohne Einbuße der Qualität und Stabilität besonders dünne und leichte Folie verwendet werden, was bei großen Mengen an hergestellten Gebinden ein großes Einsparpotential für Umverpackung bzw. Kunststofffolie bildet. Auf diese Weise werden Gebinde hergestellt, bei denen der Tragegriff an Kontaktstellen an Außenseiten der Umverpackung fixiert wird, an welchen Kontaktstellen die Umverpackung haftend und zugkraftübertragend mit Außenseiten wenigstens zweier unterschiedlicher Artikel verbunden wird.

Eine weitere optionale Variante des Verfahrens kann vorsehen, dass die Folie oder Umverpackung zum Zwecke der Applikation von Klebstoff auf die Mantelflächen der Artikel von der Mantelfläche abgehoben und der Klebstoff durch die Folie oder Umverpackung injiziert wird, wonach der Tragegriff auf die Klebestellen aufgebracht wird.

Darüber hinaus kann das Verfahren vorsehen, dass die Artikel mittels eines Folieneinschlagmoduls im Bereich einer Transportstrecke in Förderrichtung mit einer von einem Endlosvorrat zur Verfügung gestellten Folie umhüllt werden, so dass Gebinde mit in Förderrichtung seitlich angeordneten Aussparungen an gegenüber liegenden Außenseiten gebildet werden, wonach die Gebinde jeweils um ca. 90° oder 270° um eine Hochachse gedreht und der Tragegriff unter Kontaktierung der mit Aussparungen versehenen, in Förderrichtung vorder- und rückseitig angeordneten Gebindeaußenseiten appliziert wird.

Sowohl bei der oben erwähnten Vorrichtung als auch beim beschriebenen Verfahren ist jeweils auf die richtige Positionierung der Lochung in Laufrichtung der Folie zu achten, damit der später anzubringende Handgriff an den exakt richtigen Positionen mit dem Gebinde verbunden werden kann. Um die Löcher dauerhaft an der richtigen Position in die Bahn zu bringen, können verschiedene Verfahren Anwendung finden. So kann bspw. vorgesehen sein, dass für die Bestimmung der richtigen Lochpositionen in Laufrichtung der transportierten Folienabschnitte der zu applizierende Tragegriff detektiert und relativ zu dieser Position die Lochposition bestimmt wird. Dieses Verfahren funktioniert auch, obwohl der Tragegriff erst nach der Locherzeugung erstellt wird, zumindest solange sich kein variables Element wie z.B. ein Tänzer im Transportweg befindet. Detektiert wird somit der um mindestens eine Position vorauseilende Tragegriff. Systembedingt besteht hierbei die Gefahr, dass die ersten Folienabschnitte - nach einer Formatumstellung - als Ausschuss zu betrachten sind, was jedoch das Gesamtergebnis nicht beeinträchtigen muss. Die Detektion des Tragegriffs kann z.B. mit einer Lichtschranke auf die Vorder- oder Hinterkante des Tragegriffeinlegers erfolgen.

Ein alternatives Verfahren kann vorsehen, dass umgekehrt auch die Folienaussparung detektiert und als Referenzmarken für die anschließend zu applizierenden Henkel bzw. Tragegriff dienen können. Auch eine Kombination der Erfassung sowohl der Aussparungspositionen als auch der Tragegriffpositionen sowie eine Abstimmung der Messergebnisse aufeinander ist denkbar.

Darüber hinaus können ggf. auch Druckmarken oder Schnittmarken auf der Folie aufgedruckt sein, so dass eine korrekte Position der Löcher relativ zu diesen Druckmarken erfasst und bestimmt werden kann. Da solche Druckmarken auf den Folien jedoch unter Umständen aus optischen Gründen nicht erwünscht sind, sind die oben beschriebenen Positionsbestimmungsmaßnahmen in aller Regel zu bevorzugen.

Sowohl bei der oben erwähnten Vorrichtung als auch beim beschriebenen Verfahren können weitere Aspekte für ein gutes Ergebnis der Gebindeherstellung mit einer einwandfreien Anbringung der Tragegriffe wichtig sein. Nachdem mittels eines sog. Handle-Applikators der Tragegriff aufgeklebt wurde, ist im Lochbereich der Folie der Klebstoff des Tragegriffs freigelegt und könnte an Umlenkrollen, Überschubplatte usw. anhaften. Unter Umständen könnte sich an den erwähnten Stellen nach einiger Betriebszeit Kleber aufbauen, was später zu Störungen führen könnte. Um dies zu vermeiden, kann es sinnvoll sein, die entsprechenden möglichen Berührpunkte mit einer entsprechenden Antihaft-Beschichtung zu versehen. Ist bspw. eine gummierte Rolle in der Anlage erforderlich, empfiehlt sich eine Silikon-Mischung anstatt einer KautschukMischung. Außerdem empfiehlt es sich, einen Tragegriff mit einem auf PET wieder entfernbaren Klebstoff zu verwenden, um beim Endkunden starke Kleberreste auf dem Behälter nach der Tragegriff-Entfernung zu vermeiden.

Weiterhin hat es sich als sinnvoll herausgestellt, die sog. Verfahrkurven im Folientransport des Packers bzw. im Folieneinschlagmodul in einer Weise zu optimieren, dass es kaum zu einer Überförderung von Folie kommt. Eine Überförderung könnte zu einer Faltenbildung der Folie vor dem Folieneinschlag bzw. während des Folieneinschlags führen, was wiederum ein Verkleben der Folie durch die offenen Klebstellen (bei den Lochungen) mit sich selbst oder mit umgebenden Teilen (wie z.B. Überschubplatte) verursachen könnte, wodurch es zu einer Maschinenstörung kommen könnte. Es ist ebenso eine optimale Folienführung (z.B. durch Luftleit-Leisten) sinnvoll oder erforderlich.

Es sei an dieser Stelle ergänzend darauf hingewiesen, dass verschiedene Aspekte, die im Zusammenhang mit einer oder mehrerer der Ausführungsvarianten der erfindungsgemäßen Vorrichtung zur Herstellung von Gebinden mit Tragegriffen genannt und in verschiedenen Details erläutert wurden, gleichermaßen im Zusammenhang mit dem vorstehend in mehreren verschiedenen Ausführungsvarianten erläuterten erfindungsgemäßen Verfahren zur Herstellung von Gebinden mit Tragegriffen zu sehen sind bzw. gesehen werden können. Alle diese Aspekte, die im Zusammenhang mit der Vorrichtung genannt sind, können gleichermaßen als verfahrensmäßige Aspekte oder Ausgestaltungen gesehen werden. Gleiches gilt umgekehrt, d.h. alle Aspekte, die im Zusammenhang mit dem erfindungsgemäßen Verfahren genannt sind, können gleichermaßen als die erfindungsgemäße Vorrichtung betreffende Aspekte oder Ausgestaltungen gesehen werden.

Weiterhin umfasst die vorliegende Erfindung ein Gebinde mit Tragegriff, das mit einem Verfahren gemäß einer der zuvor beschriebenen Ausführungsvarianten sowie vorzugsweise mit einer erfindungsgemäßen Vorrichtung gemäß einer der ebenfalls zuvor beschriebenen Ausführungsvarianten hergestellt ist. Das Gebinde umfasst wenigstens zwei Artikel, die mittels einer Schrumpffolie, Banderole o. dgl. Umverpackung zumindest teilweise umhüllt und zusammengehalten sind, wobei der Tragegriff an Kontaktstellen an Außenseiten der Umverpackung und/oder an Mantelflächen von wenigstens zwei unterschiedlichen Artikeln fixiert ist, an welchen durch Klebestellen und/oder Schweißstellen zwischen Mantelflächen der Artikel und dem Tragegriff gebildeten Kontaktstellen die Umverpackung haftend und zugkraftübertragend mit dem Tragegriff sowie mit den Mantelflächen der wenigstens zwei unterschiedlichen Artikel verbunden ist. Weiterhin ist bei dem Gebinde vorgesehen, dass sich die Kontaktstellen zumindest teilweise mit Aussparungen in der Umverpackung decken, wodurch beim Tragen des Gebindes am Tragegriff auftretende Zugkräfte weitestgehend vom Tragegriff über die Kontaktstellen auf die Mantelflächen der wenigstens zwei unterschiedlichen Artikel geleitet sind.

Gemäß einer bevorzugten Ausgestaltung der vorliegenden Erfindung ist der mittels der erfindungsgemäßen Vorrichtung am Gebinde angebrachte Tragegriff derart über Kontaktstellen am jeweiligen Gebinde fixiert, dass alle beim Tragen des Gebindes am Tragegriff auftretenden Zugkräfte weitestgehend vom Tragegriff über die Kontaktstellen auf Außenseiten von wenigstens zwei unterschiedlichen Artikeln geleitet sind. Dies kann im Wesentlichen dadurch erreicht werden, dass der Tragegriff an Kontaktstellen an Außenseiten der Umverpackung fixiert ist, an welchen Kontaktstellen die Umverpackung haftend und zugkraftübertragend mit Außenseiten bzw. mit Außenmantelflächen wenigstens zweier unterschiedlicher Artikeln verbunden ist. Die Kontaktstellen können bspw. durch Klebestellen und/oder Schweißstellen zwischen Mantelflächen der Artikel und dem Tragegriff gebildet sein, wobei diese Klebestellen und/oder Schweißstellen die Umverpackung zugkraftübertragend mit dem Tragegriff sowie mit den Mantelflächen der Artikel verbinden. Wichtig ist es hierbei, dass die Zugkräfte beim Tragen des Gebindes am Tragegriff in einer Weise verlaufen können bzw. verteilt werden, dass beim Tragen des Gebindes keine nennenswerten oder nur relativ geringe Zugkräfte auf die umhüllende Verpackung einwirken. Der Kraftverlauf geht somit immer auf dem direkten Weg von der Klebe- oder Schweißstelle des Tragegriffs auf die Artikel über.

Die Erfindung sieht vor, dass sich die Kontaktstellen zwischen den beiden Enden des jeweiligen Tragegriffs und den Außenmantelflächen der kontaktierten Artikel zumindest teilweise mit Aussparungen in der Umverpackung decken und diese durchdringen und somit eine Klebe- und/oder Schweißverbindung zwischen den jeweiligen Tragegriffenden und den Außenseiten oder Mantelflächen der Artikel herstellen, insbesondere unter Einbeziehung der Umverpackung, die an den Rändern ihrer jeweiligen Aussparungen mit den Kontaktstellen verbunden sein können. Die Kontaktstellen können wahlweise durch Klebestellen zwischen den Mantelflächen der Artikel und dem Tragegriff gebildet sein, wobei die Tragegriffenden an den Artikeln fixiert sind, so dass eine zum Greifen des Gebindes geeignete Schlaufe das Gebinde nach oben überragt. Wahlweise können die Kontaktstellen auch durch Schweißstellen zwischen den Mantelflächen der Artikel und dem Tragegriff bzw. den beiden Tragegriffenden gebildet sein. Die Kontaktstellen, d.h. die Verbindungsstellen zwischen dem Tragegriff und dem Gebinde sind zudem in einer Weise ausgestaltet, dass die Umverpackung bzw. die als Umverpackung typischerweise eingesetzte Schrumpffolie im Bereich der Kontaktstellen jeweils Aussparungen aufweist, wobei die Aussparungen im Wesentlichen mit den Dimensionen der Kontaktflächen korrespondieren oder auf diese abgestimmt sein können. Die Klebe- oder Schweißstellen können dabei durch die Aussparungen hindurchgreifen und die Ränder der Aussparung zumindest teilweise berühren. Mit einer solchen Fixierung des Tragegriffs an den Artikeln wird die umhüllende Umverpackung von Zugkräften entlastet bzw. völlig befreit, die beim Tragen des Gebindes am Tragegriff auf das Gebinde übertragen werden und bei einem an der Umverpackung verankerten Tragegriff zu hohen punktuellen Belastungen führen würden, die zu einem Bruch, Einreißen oder allgemein zu einem Versagen oder Teilversagen der umhüllenden Folie oder Umverpackung führen könnte.

Der besondere Vorteil der erfindungsgemäßen Ausgestaltung liegt in der Verwendbarkeit sehr dünner Folien und der Übertragbarkeit sehr hoher Zugkräfte, die über den Tragegriff auf das Gebinde übertragen werden können, ohne dass es zu Beschädigungen oder Beeinträchtigungen kommt. Gegenüber bisher bekannten Verfahren kann die Foliendicke nochmals reduziert werden, wahlweise auf Stärken von weniger als 35 µm, ggf. auch auf Stärken von 25 µm oder noch weniger. Als Tragegriffmaterial kommen unterschiedliche Kunststoff- und/oder Verbundmaterialien in Frage, bspw. ein PET-Material ausreichender Stärke, das eine Flexibilität und ggf. eine Längselastizität aufweist, die ein komfortables einhändiges Greifen und Tragen des Gebindes am Tragegriff erlaubt. Zudem kann das Tragegriffmaterial eine Papier- oder Kartonverstärkung sowie selbstklebende Flächen an den Tragegriffenden aufweisen. Typische Gebinde solcher Art können bspw. vier, insbesondere jedoch sechs oder mehr Getränkebehälter aufweisen, die mittels schrumpfbarer Folie oder mittels anderer Umverpackungen wie bspw. schlauchartigen Umhüllungen zusammengehalten und zu einem transportablen Gebinde zusammengefasst sind. Typische Gebindegrößen umfassen insbesondere sechs Getränkebehälter; bei Vierer-Gebinden müsste der Tragegriff relativ breit ausfallen, damit er auf jeder Seite mit zwei Behältern verbunden werden kann, oder aber diagonal verlaufen. Dasselbe würde auch bei Achter-Gebinden zutreffen.

Die Kontaktstellen können insbesondere durch Klebestellen und/oder durch Schweißstellen zwischen den Mantelflächen der Artikel und dem Tragegriff gebildet sein. Wahlweise können sich die Kontaktstellen im Wesentlichen auf die Aussparungen beschränken, so dass sie die Umverpackung nicht oder nur linienartig berühren und damit nur geringfügig in die Ränder der Aussparung hineinreichen. In diesem Fall bleibt die Umverpackung, Folie, Schrumpffolie o. dgl. weitgehend frei von Zugbelastungen, wenn das Gebinde am Tragegriff angehoben wird. Ebenso möglich sind jedoch Varianten, bei der sich die Kontaktstellen zumindest teilweise in die Umverpackung bzw. Ränder deren Aussparungen erstrecken, so dass die Kontaktstellen die Ränder der Aussparungen umfassen oder sich zumindest teilweise mit den Rändern der Aussparungen überdecken.

Wahlweise können die Kontakt- bzw. Klebe- und/oder Schweißstellen vollflächig ausgebildet sein oder mehrere Klebe- oder Schweißpunkte je Kontaktstelle umfassen. Zudem können die Aussparungen im Wesentlichen mit den Dimensionen der Kontaktflächen korrespondieren oder etwas kleiner als diese sein, so dass die fixierten Bereiche des Tragegriffs randseitig der Aussparungen in die Umverpackung hineinreichen. Alternativ sind auch Varianten denkbar, bei denen die Aussparungen deutlich größer sind als die Kontaktstellen oder Kontaktflächen, so dass die Aussparungen bspw. jeweils ein sog. Folienauge bilden können, das durch ein Umwickeln der zu einem Gebinde gruppierten Artikel um eine horizontale Querachse entstanden ist.

Wichtig ist im vorliegenden Zusammenhang die Stabilisierung von bisher bekannten Schwachstellen bei mit dünner Folie umhüllten Gebinden, die mit einem Tragegriff versehen sind. Um die Gebindestabilität zu gewährleisten, können Klebepunkte oder Schweißpunkte zwischen Folie und Behälter - im Bereich der Handgriff-Klebefläche - appliziert werden. Die Haftpunkte können durch beliebige geeignete Kleber wie Heißkleber, Flüssigkleber, doppelseitiges Klebeband oder auch durch Verschweißen - z.B. mittels Ultraschall-Verschweißung - hergestellt werden. Sowohl bei einer Verschweißung als auch bei einer Klebeverbindung ist es zudem möglich, alle drei Komponenten (Behälter, Umverpackungsfolie und Handgriff) miteinander zu verbinden. Die Anzahl, Größe und Lage der Klebe- oder Schweißpunkte richtet sich nach den jeweiligen Anforderungen. In diesem Zusammenhang ist es nicht entscheidend, ob der Kleber vor dem Folieneinschlag oder nachher an dem fertigen Gebinde (mit oder ohne aufgeklebtem Handgriff) appliziert wird, so lange die Verarbeitungszeit des Klebers zur Anwendung passt.

Die Klebe- oder Schweißverbindung von der Schrumpffolie zu den Behältern leitet den Kraftverlauf beim Anheben des Gebindes am Handgriff, die aus der Gewichtskraft des Gebindes resultiert, über den Handgriff auf die Behälter, ohne dass die Folie hierbei übermäßig gedehnt und dadurch ggf. zerstört wird.

Durch ein teilweises oder vollständiges Verkleben oder Verschweißen des Tragegriffes mit den Behältern selbst anstelle der umhüllenden Folie verläuft der Kraftfluss beim Anheben des Gebindes nicht vom Tragegriff über die Folie zum Behälter, sondern direkt zwischen Griff und Behälter. Die Henkelfestigkeit wird mit dieser Anordnung somit unabhängig von der Folienfestigkeit hergestellt und im üblichen Gebrauch gewährleistet, so dass wahlweise auch sehr dünne Folie zum Einsatz kommen kann. Bei gleicher Funktion kann somit der Materialeinsatz an Folie bzw. Sekundärverpackung deutlich reduziert werden. Die Tragfähigkeit des Tragegriffs wird gleichzeitig deutlich erhöht. Die Gebinde können mit herkömmlichen Maschinen ohne nennenswerten Umrüstaufwand hergestellt und verarbeitet werden. In Belastungsversuchen hat sich herausgestellt, dass solcherart hergestellte Gebinde mit Schrumpffolien-Sekundärverpackungen auch mit Folienstärken von 25 µm mit einer hohen Anzahl von Lastzyklen zu beaufschlagen waren, ohne dass es zu einem Versagen der Verbindung und/oder der Folie gekommen wäre, während bei herkömmlichen Verbindungssystemen kaum ein Anheben des Gebindes ohne Ausreißen der Folie zu realisieren war.

Weiterhin hat die erfindungsgemäße Verbindungstechnik zwischen Tragegriff und Gebinde den Vorteil, dass alle Arten von Bedruckungen, Bildern, Strukturierungen etc., die sich auf der Umverpackung bzw. der Schrumpffolie befinden und ggf. in Bezug auf die umhüllten Artikel oder Getränkebehälter ausgerichtet und positioniert sein können, während der Handhabung der Gebinde nicht beeinträchtigt werden können, da sich die Umverpackung oder die Folie auch beim Anheben der Gebinde am Tragegriff nicht gegenüber den Artikeln verschieben, sondern an ihrer vorgesehenen ursprünglichen Position verbleiben.

Ergänzend kann an dieser Stelle noch erwähnt werden, dass die Absaugvorrichtung nicht nur für das Entfernen und Sammeln der Folienlappen (Umverpackungsabschnitte) sorgen kann, sondern dass die Absaugvorrichtung darüber hinaus auch noch die wichtige Funktion eines Widerlagers erfüllt. Dieses Widerlager wird wirksam während des Abtrennens des Folienlappens, wenn sich der Schneiddraht nach oben bewegt und aus der Folienebene herausfährt. Die Saugdüse der Absaugvorrichtung ist während dieses Vorganges so nah an dem Schneidelement (z.B. Heizdraht) positioniert, dass in dieser Phase sich der Anfang des Lappens bereits in der flachen Düse befindet. Die Saugkraft auf den Lappen erzeugt bzw. bildet das Widerlager für den Schnitt, damit das Lappenende nicht nach oben gebogen wird, was einen sauberen und effektiven Schnitt unter Umständen behindern oder sogar verhindern könnte.

Nachfolgend verdeutlichen Ausführungsbeispiele die Erfindung und ihre Vorteile anhand der beigefügten Zeichnungen. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt eine Ausführungsvariante einer erfindungsgemäßen Vorrichtung zur Herstellung von Gebinden mit Tragegriffen.
Fig. 2A zeigt eine schematische Seitenansicht einer Ausführungsvariante der Vorrichtung gemäß Fig. 1.
Fig. 2B zeigt eine detailliertere Seitenansicht der Vorrichtung gemäß Fig. 1.
Fig. 3A zeigt eine schematische Draufsicht auf einen Teil der Vorrichtung gemäß Fig. 1, Fig. 2A und Fig. 2B.
Fig. 3B zeigt eine weitere, detailliertere Draufsicht der Vorrichtung gemäß Fig. 1.
Fig. 3C zeigt eine schematische Perspektivansicht einer Ausführungsvariante einer Stanzvorrichtung, die Teil einer steuerbaren Schneid-, Stanz- und/oder Lochungsvorrichtung zur Einbringung von Aussparungen in zu einem Folieneinschlagmodul beförderte Folienabschnitte.
Fig. 4 zeigt in drei schematischen Draufsichten verschiedene Ausführungsvarianten von in die Folienabschnitte eingebrachten Lochmustern bei einbahniger Folienführung (Fig. 4A), bei zweibahniger Folienführung (Fig. 4B) und bei dreibahniger Folienführung (Fig. 4C).
Fig. 5A und Fig. 5B zeigen zwei verschiedene Seitenansichten auf ein Gebinde mit Tragegriff, das mit einer Vorrichtung gemäß Figuren 1 bis 3C hergestellt wurde.
Fig. 6 zeigt eine schematische Perspektivansicht einer weiteren Variante des Gebindes.
Fig. 7 zeigt eine schematische Detailansicht einer Verbindungsstelle zwischen einem Tragegriffende und einer Außenfläche des Gebindes.

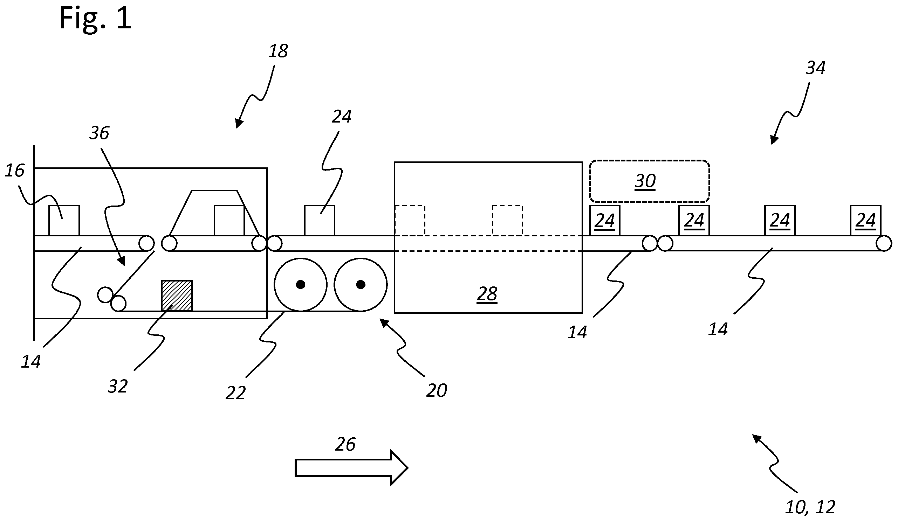

Für gleiche oder gleich wirkende Elemente der Erfindung verwenden die Figuren 1 bis 7 jeweils identische Bezugsziffern. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung zur Herstellung von Gebinden oder das erfindungsgemäße Verfahren zur Herstellung von Gebinden ausgestaltet sein können und stellen keine abschließende Begrenzung dar. Es sei daher an dieser Stelle betont, dass die anhand der Figuren relativ konkret und gegenständlich beschriebenen Ausführungsbeispiele den in den Ansprüchen niedergelegten und im allgemeinen Teil der Beschreibung in den unterschiedlichsten Ausführungsvarianten definierten abstrakten Erfindungsgedanken in keiner Weise schmälern oder einschränken sollen.

Die schematische Darstellung der Fig. 1 verdeutlicht die Funktionsweise der erfindungsgemäßen Vorrichtung zur Herstellung von Gebinden und zur Anbringung von Tragegriffen an diesen Gebinden anhand eines Ausführungsbeispiels. So umfasst die gezeigte Vorrichtung 10 zur Herstellung von Gebinden mit Tragegriffen, die auch generalisierend als Verpackungsmaschine 12 bezeichnet werden kann, eine Transportstrecke 14 zur Beförderung von Artikelgruppen 16, ein Folieneinschlagmodul 18 zur zumindest teil- oder abschnittsweisen Umhüllung der Artikelgruppen 16 mit einer von einem Folienvorrat 20 zugeführten, dehn- und/oder unter Wärme schrumpfbaren Folie 22 zur Bildung von Foliengebinden 24, die jeweils mit Aussparungen an wenigstens zwei gegenüber liegenden Seitenflächen der Gebinde 24 versehen sind. Weiterhin kann die Vorrichtung 10 bzw. die Verpackungsmaschine 12 ein dem Folieneinschlagmodul 18 in Förder- bzw. Transportrichtung 26 nachgeordnetes Schrumpfmodul 28 umfassen, in dem die Gebinde 24 mit Hitze beaufschlagt werden, um die Folienumhüllungen fest um die Artikelgruppen 16 zu schrumpfen und um auf diese Weise die darin befindlichen Artikel zusammenzuhalten und aneinander zu fixieren.

Zudem umfasst die Vorrichtung 10 bzw. die Verpackungsmaschine 12 eine Applikationseinrichtung 30 zur Aufbringung von Tragegriffen an den Gebinden 24 unter Fixierung der Tragegriffenden an Artikelmantelflächen im Bereich der Aussparungen mittels Klebe- und/oder Schweißverbindungen und unter Durchdringung der umhüllenden Folie 22 und/oder unter Herstellung einer haftenden Verbindung mit der schrumpfbaren Folie 22. Im gezeigten Ausführungsbeispiel der Fig. 1 befindet sich die Applikationseinrichtung 30 im Bereich der Transportstrecke 14 und in Förderrichtung 26 hinter dem Schrumpfmodul 28. Sie kann sich jedoch ebenso unmittelbar nach dem Folieneinschlagmodul 18 und damit wahlweise auch in Transportrichtung 26 vor dem Schrumpfmodul 28 befinden. Außerdem ist vorgesehen, dass zwischen dem Folienvorrat 20 und dem Folieneinschlagmodul 18 an einer geeigneten Stelle der Folienförderung eine hier nur schematisch angedeutete steuerbare Schneid-, Stanz- und/oder Lochungsvorrichtung 32 zur Einbringung der Aussparungen in die zum Folieneinschlagmodul 18 beförderte Folie 22 angeordnet ist.

Nach dem Durchlaufen der Applikationseinrichtung 30 können die mit Folie 22 umhüllten Foliengebinde 24 in Transportrichtung 26 mittels eines Gebindetransportabschnittes 34 weiteren, hier nicht gezeigten, Verpackungs- und/oder Verarbeitungsstationen zugeführt werden, so bspw. einer Palettiereinrichtung o. dgl.

Wie es die Fig. 1 lediglich andeutet, kann die Schrumpffolie 22 im Bereich vor dem Folieneinschlagmodul 18, zwischen dem Folienvorrat 20 und einer Folientrennstation 36, mit geeigneten Aussparungen versehen werden. Wahlweise können die Aussparungen jedoch auch nach Durchlaufen der Folientrennstation 36 in die Schrumpffolie 22 eingebracht werden. Diese für die Anbringung der Tragegriffe in der nachfolgend beschriebenen Weise unverzichtbaren Aussparungen können mittels der erwähnten, in der Darstellung der Fig. 1 jedoch noch nicht näher spezifizierten Schneid-, Stanz- und/oder Lochungsvorrichtung 32 insbesondere unmittelbar nach dem Abwickeln der Folie 22 von ihrem Endlosvorrat 20 und vor der Umhüllung der Artikelgruppen 16 in die jeweils abgewickelte und zur Folientrennstation 36 beförderten Folienbahnen 22 eingebracht werden. Nach dem Umhüllen der Artikelgruppen 16 mit der Folie 22 im Folieneinschlagmodul 18, insbesondere nach dem Durchlaufen des Schrumpfmoduls 28, kann der Tragegriff mit seinen Enden über die in die Folie 22 eingebrachten Aussparungen unter zumindest teilweiser Überdeckung bzw. Abdeckung der Aussparungen auf die Folie 22 oder Umverpackung appliziert werden, nämlich durch Verkleben oder Verschweißen, wonach anschließend die solchermaßen hergestellten und mit Tragegriffen versehenen Gebinde 24 weitertransportiert und bspw. palettiert werden. So kann dem Schrumpfmodul 28 eine geeignete Applikationseinrichtung 30 zur Fixierung der Tragegriffe an den Gebinden 24 nachgeordnet (oder auch vorgeordnet) sein, bevor die Gebinde 24 anschließend in Förderrichtung 26 weitertransportiert werden.

Bei dem erfindungsgemäßen Verfahren zur Ausstattung von Folienschrumpfgebinden 24 mit Tragegriffen ist vorgesehen, dass der in nachfolgenden Figuren detaillierter beschriebene Tragegriff an der entsprechend vorbereiteten und mit Aussparungen versehenen Folie 22 haftend angebracht wird, so dass die Fixierung durch Verklebung oder Verschweißen des Tragegriffs anschließend durch die Aussparungen hindurch an die jeweiligen Artikelmantelflächen der zu Gebinden 24 zusammengefassten Artikel- oder Behältergruppen 16 reicht. Das Folieneinschlagmodul 18 sorgt zuvor für die Umhüllung der gruppierten Artikel 16 mit den passend abgelängten Folienabschnitten 22, bevor der weitere Transport durch den Schrumpfofen bzw. das Schrumpfmodul 28 und den sich daran anschließenden Gebindetransportabschnitt 34 erfolgt.

Im Bereich der in Fig. 1 lediglich schematisch angedeuteten und durch einen rechteckigen Kasten mit unterbrochener Linierung kenntlich gemachten Applikationseinrichtung 30 kann die Anbringung des Tragegriffs folgendermaßen erfolgen. Diese beschriebene Verfahrensvariante sieht vor, dass die mit Folie 22 umhüllten und bereits das Schrumpfmodul 28 durchlaufenen Gebinde 24 in einer Weise befördert werden, dass die in Transportrichtung 26 seitlich befindlichen Längsseiten der Gebinde 24 jeweils die Aussparungen aufweisen. Nach dem Umwickeln der Artikelgruppen 16 erfolgt im Schrumpfofen bzw. im Schrumpfmodul 28 das Aufschrumpfen der die Artikelgruppen 16 umhüllenden Folie 22 unter Wärmeeinwirkung, wonach der Tragegriff in den Bereichen der Aussparungen an die Artikelmantelflächen appliziert werden kann. Während des weiteren Transports im Gebindetransportabschnitt 34 können die Gebinde 24 zunächst mittels einer geeigneten Handhabungseinrichtung um ca. 90° oder 270° um eine Hochachse bzw. um einen Winkel von 90 oder 270° quer zur Förderrichtung 26 gedreht werden, so dass der Tragegriff mittels der nachgeordneten Applikationseinrichtung 30 unter Kontaktierung der mit den Aussparungen versehenen, in Förderrichtung 26 vorder- und rückseitig angeordneten Gebindeaußenseiten appliziert werden kann. Bei dieser Verfahrensvariante kann als Umverpackung bspw. Schrumpffolie, Klebefolie oder eine dünne und dehnbare, gut haftende Folienbahn als Umhüllung für die Artikelgruppen 16 zur Ausbildung von Foliengebinden 24 verwendet werden. Wichtig oder zumindest zu bevorzugen ist bei dieser Variante des Applikationsverfahrens für die Tragegriffe die Drehung der Gebinde 24, wodurch die jeweiligen Aussparungen in bzw. gegen die Laufrichtung der transportierten Gebinde 24 gerichtet wird, was nach dem Umhüllen mittels des Einschlagmoduls 18 nicht zwingend gegeben wäre. Zu diesem Zweck können die Gebinde 24 bspw. um 90 oder 270 Grad um ihre Hochachse gedreht werden.

Wie dies die Fig. 1 in schematischer Weise andeutet, können die dem Folieneinschlagmodul 18 zugeführten Folienabschnitte 22 insbesondere von dem angedeuteten Endlos-Folienvorrat 20 entnommen werden. Wahlweise könnten die Folienabschnitte 22 auch als einzelne Abschnitte definierter Länge befördert werden und vor ihrer Zuführung zum Folieneinschlagmodul 18 die oben bereits erwähnte Schneid-, Stanz- und/oder Lochungsvorrichtung 32 zum Einbringen der Aussparungen durchlaufen.

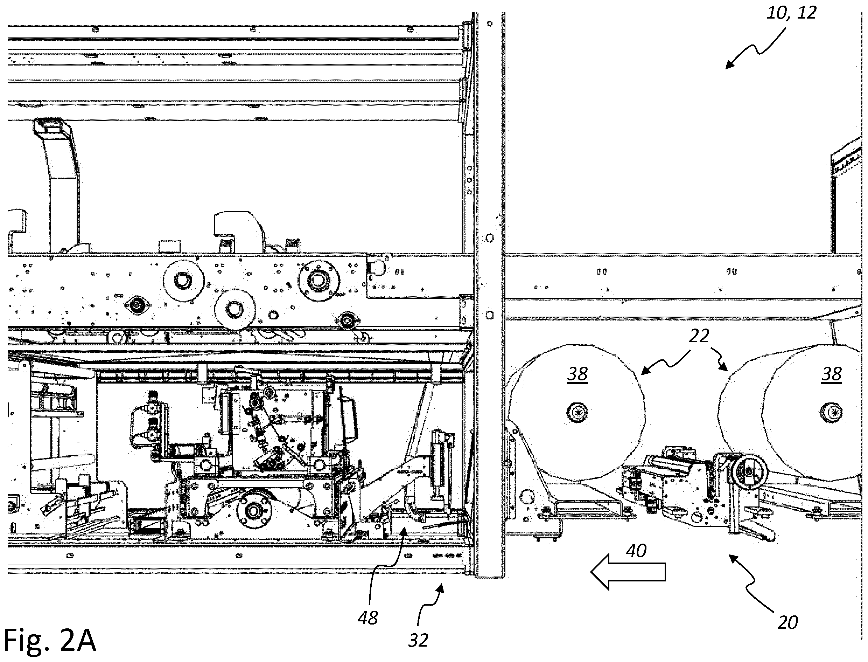

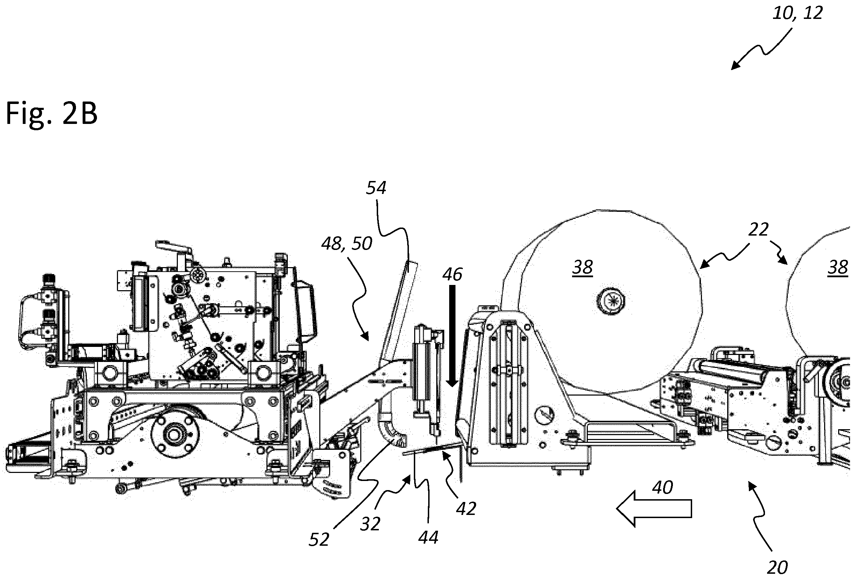

Die Figuren 2A und 2B zeigen in schematischen Ansichten weitere Details einer Ausführungsvariante der als Verpackungsmaschine 12 ausgebildeten Vorrichtung 10. Dort ist der Folienvorrat 20 im Wesentlichen durch zwei Folienrollen 38 gebildet, auf denen die Schrumpffolie 22 jeweils als Endlosbahn aufgewickelt ist, und die nach ihrem jeweiligen Abwickeln im Wechsel aktiviert werden können, so dass ein ununterbrochener Förderprozess zur Versorgung des Folieneinschlagmoduls 18 (vgl. Fig. 1) mit Folie 22 ermöglicht ist. Was hier verallgemeinernd als Folie 22 bzw. als Folienbahn 22 bezeichnet wird, ist normalerweise durch eine Schrumpffolie gebildet, wie sie oben bereits anhand ihrer typischen physikalischen Eigenschaften charakterisiert wurde.

Dem Folienvorrat 20 mit seinen hier nicht näher erläuterten Fördereinrichtungen zum kontinuierlichen Folientransport ist die steuerbare Schneid-, Stanz- und/oder Lochungsvorrichtung 32 nachgeordnet. Wie es die Figuren 2A und 2B andeuten, umfasst die steuerbare Schneid-, Stanz- und/oder Lochungsvorrichtung 32 im hier gezeigten Ausführungsbeispiel eine im Förderprozess der Folie 22 in Querrichtung zur Transport- und/oder Vorschubrichtung 40 der Folie 22 bewegbare Schneidklinge 42, der vorzugsweise eine unterhalb der Folienbahn 22 angeordnete Stützeinrichtung 44 zugeordnet ist, welche ein Ausweichen der Folie 22 nach unten verhindert, wenn die Schneidklinge 42 senkrecht in Pfeilrichtung 46 nach unten bewegt wird und in die Folie 22 zur Herstellung der Aussparungen eintaucht. Wie es im Detail hier nicht erkennbar ist, kann die steuerbare Schneid-, Stanz- und/oder Lochungsvorrichtung 32 durch eine bogenförmige Klinge 42 gebildet sein bzw. eine solche bogenförmige Klinge 42 umfassen, die in etwa quer zur Transport- und/oder Vorschubrichtung 40 der Folie 22 bewegbar ist (Schneidrichtung 46) und bei der Einbringung der Aussparungen Folienabschnitte herausschneidet. Die steuerbare Schneid-, Stanz- und/oder Lochungsvorrichtung 32 kann insbesondere einen Heizdraht umfassen, was das Schneiden der thermoplastischen schrumpfbaren Folie 22 erleichtert.

Der steuerbaren Schneid-, Stanz- und/oder Lochungsvorrichtung 32 ist zudem eine Aufnahme- und/oder Sammeleinrichtung 48 zur Erfassung, Aufnahme und/oder zum Sammeln von herausgeschnittenen Folienabschnitten zugeordnet. Diese Aufnahme- und/oder Sammeleinrichtung 48 ist im gezeigten Ausführungsbeispiel durch eine der steuerbaren Schneid-, Stanz- und/oder Lochungsvorrichtung 32 zugeordnete Absaugeinrichtung 50 zur Erfassung und Beförderung der herausgeschnittenen Folienabschnitte gebildet. Eine Mündungsöffnung 52 eines Absaugschlauches 54 ist hierbei in Transport- bzw. Vorschubrichtung 40 der Folie 22 unmittelbar hinter der beweglichen Schneidklinge 42 der Schneid-, Stanz- und/oder Lochungsvorrichtung 32 angeordnet, so dass alle herausgeschnittenen Folienabschnitte zuverlässig angesaugt und von der Aufnahme- und/oder Sammeleinrichtung 48 aufgenommen und von der beförderten Folie 22 getrennt werden können.

Denkbar wäre auch eine Variante der Vorrichtung 10, bei der die Aufnahme- und/oder Sammeleinrichtung 48 anstelle einer Absaugeinrichtung 50 ein der steuerbaren Schneid-, Stanz- und/oder Lochungsvorrichtung 32 zugeordnetes Gebläse zur Erfassung und/oder Entfernung und/oder Beförderung der herausgeschnittenen Folienabschnitte aufweist.

Eine hier nicht gezeigte vorteilhafte Variante der erfindungsgemäßen Vorrichtung 10 bzw. der Verpackungsmaschine 12 kann mehrere parallele Transportstrecken bzw. Folientransportspuren aufweisen, wobei auch mehrere parallele Folieneinschlagmodule 18 und jeweils diesen zugeordnete Schneid-, Stanz- und/oder Lochungsvorrichtungen 32 zur Einbringung der Aussparungen in jede der parallelen Folienbahnen 22 vorzusehen sind. Auf diese Weise kann eine mehrbahnige Verarbeitung und Verpackung von in mehreren parallel angeordneten Transportspuren transportierten Artikel- oder Gebindeströmen erfolgen.

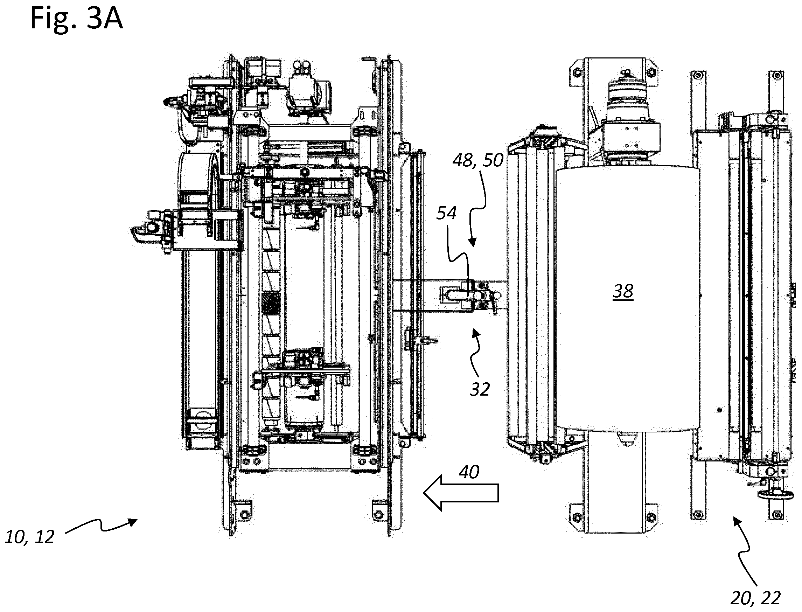

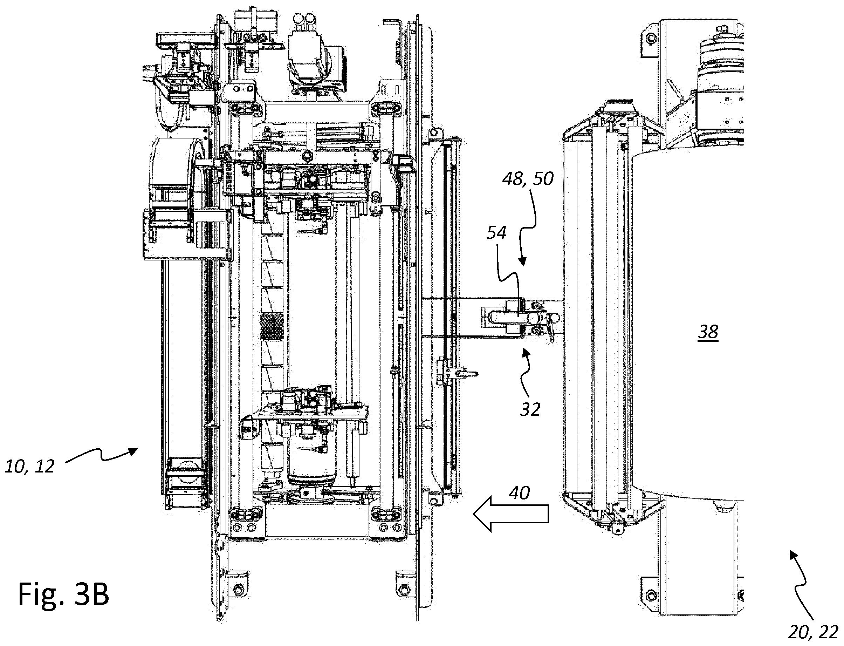

Die schematischen Draufsichten der Figuren 3A und 3B zeigen nochmals einige der anhand der Figuren 2A und 2B beschriebenen Details der dort gezeigten Ausführungsvariante der erfindungsgemäßen Vorrichtung 10 zur Herstellung der Gebinde 24 (vgl. Fig. 1) bzw. der erfindungsgemäßen Verpackungsmaschine 12. Dort ist erkennbar, dass die Schneid-, Stanz- und/oder Lochungsvorrichtung 32 dem Folienvorrat 20 nachgeordnet und in etwa mittig im Bereich des Folientransports angeordnet ist, so dass die Folie 22 auch in etwa mittig mit den Aussparungen versehen wird.

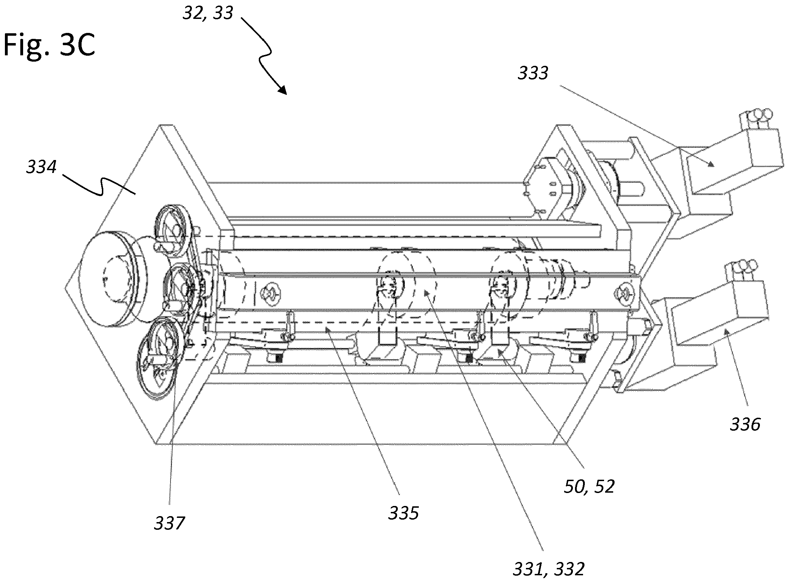

Die schematische Perspektivansicht der Fig. 3C zeigt im Detail eine weitere Ausführungsvariante einer Stanzvorrichtung 33, die Teil einer steuerbaren Schneid-, Stanz- und/oder Lochungsvorrichtung 32 zur Einbringung von Aussparungen in die zum Folieneinschlagmodul 18 beförderte Folienabschnitte 22 ist (vgl. Fig. 1). Wie es die Fig. 3C andeutet, kann es sich bei der steuerbaren Schneid-, Stanz- und/oder Lochungsvorrichtung 32 um eine Stanzvorrichtung 33 mit rotierender Stanzwalze 331 mit mindestens einem, wahlweise jedoch zwei oder mehr daran angeordneten oszillierenden Stanzwerkzeugen 332 handeln, die der Einbringung der Aussparungen in die Folienbahnen 22 oder -abschnitte dient. Wahlweise können mehrere solcher Stanzvorrichtungen 33 parallel angeordnet sein, um mehrere parallele Lochreihen oder Reihen mit Aussparungen in die Folienbahnen 22 einzubringen, wobei diese Folienbahnen 22 bspw. für einen mehrbahnigen Folientransport nach dem Einbringen der Aussparungen und vor oder nach dem Ablängen in benötigte Folienabschnitte in mehrere Bahnen zerteilt werden können. Wie es die Fig. 3C andeutungsweise erkennen lässt, kann die rotierende Stanzwalze 331 jedoch auch mit mehreren Stanzwerkzeugen 332 ausgestattet sein, so dass in eine später zu zerteilende Folienbahn 22 mehrere parallele Lochreihen eingebracht werden können, deren Abstand voneinander dem Abstand der Stanzwerkzeuge 332 an der Stanzwalze 331 entspricht.

Ein elektromotorischer Antrieb 333 für die rotierende Stanzwalze 331 befindet sich an einem Rahmen 334, an dem auch eine parallel zur Stanzwalze 331 rotierende Gegendruckwalze 335 gelagert ist, die mit einem eigenen elektromotorischen Antrieb 336 ausgestattet ist. Bei der rotierenden Stanzwalze 331 werden die Löcher durch geeignete Stanzwerkzeuge 332 erstellt, die sich auf der zylindrischen Stanzwalze 331 befinden. Die Stanzwerkzeuge 332 drücken sich während des Stanzvorgangs gegen die zylindrische Gegendruckwalze 335 ab, oder tauchen in eine Matrize, die sich in der synchron rotierenden Gegendruckwalze 335 befinden. Auch dieser Stanzvorrichtung 33 mit der rotierenden Stanzwalze 332 und der hierzu parallel rotierenden Gegendruckwalze 335 ist vorzugsweise wiederum eine Absaugeinrichtung 50 zugeordnet, mit der die aus der Folienbahn 22 (vgl. Fig. 1, Figuren 2A bis 3B) herausgestanzten Folienstücke (nicht gezeigt) abgesaugt und aus dem Bereich der weiteren Folienförderung entfernt werden können.

Eine in der Fig. 3C seitlich am Rahmen 334 erkennbare und als optionale, aber in der Praxis sehr sinnvolle Ausstattungsvariante der gezeigten Stanzvorrichtung 33 anzusehende Spindel-Formatverstellung 337 ermöglicht eine Anpassung der Abstände der Stanzwerkzeuge 332 voneinander durch deren Positionierung entlang der Längsachse der Stanzwalze 331 mittels eines Spindel-Verstellmechanismus. Vorzugsweise werden hierbei gleichzeitig auch die jeweils den einzelnen Stanzwerkzeugen 332 zugeordneten Mündungsöffnungen 52 der Absaugeinrichtung 50 in entsprechender Weise mitverstellt, so dass sie jeweils den entsprechenden Stanzwerkzeugen 332 an der Stanzwalze 331 räumlich zugeordnet bleiben und jederzeit für eine zuverlässige Entfernung der von diesen aus der Folienbahn 22 herausgestanzten Folienabschnitte sorgen können.

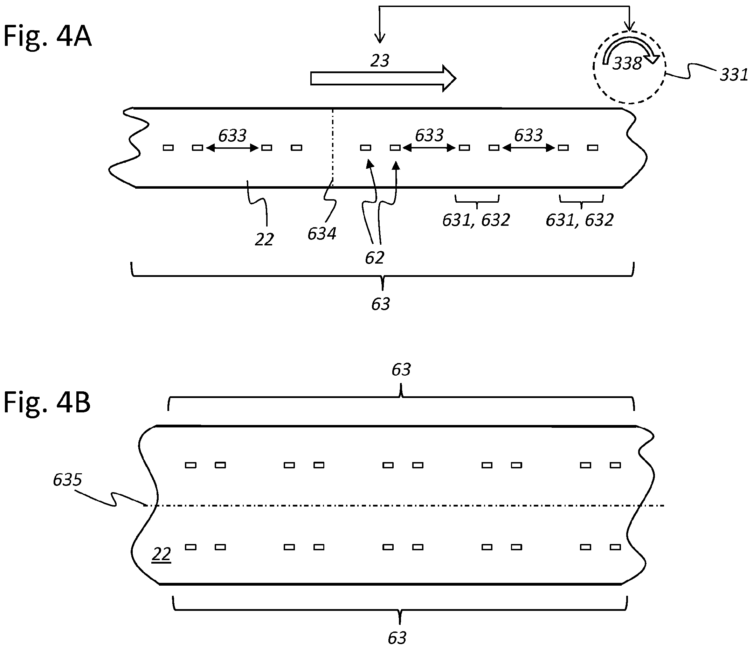

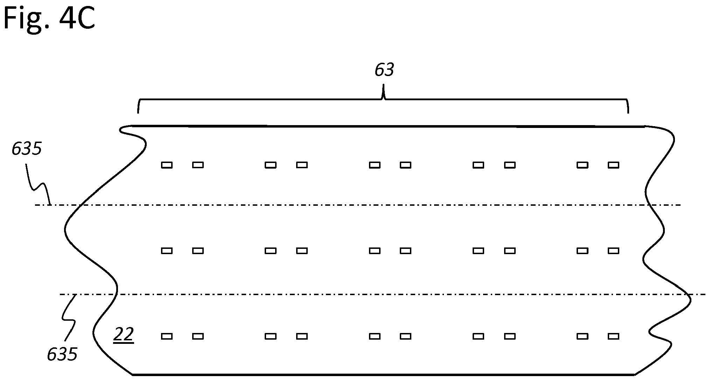

Die Figuren 4A, 4B und 4C zeigen in schematischen Draufsichten verschiedene Ausführungsvarianten von in die Folienabschnitte 22 eingebrachten Lochmustern bei einbahniger Folienführung (Fig. 4A), bei zweibahniger Folienführung (Fig. 4B) und bei dreibahniger Folienführung (Fig. 4C). Beginnend mit der schematischen Draufsicht der Fig. 4A sollen nachfolgend auch Steuerungsvarianten für die aufeinander abgestimmte Steuerung der Schneid-, Stanz- und/oder Lochungsvorrichtung 32 bzw. der Stanzvorrichtung 33 sowie des Folientransports erfolgen, damit die Abstände der Aussparungen 62 in die Folienbahn 22 sowie die gesamte Ausbildung des in die Folienbahn 22 eingebrachten Lochmusters 63 den Anforderungen der mittels der Applikationseinrichtung 30 zu positionierenden Tragegriffe entspricht.

So kann grundsätzlich vorgesehen sein, dass die rotierende Stanzwalze 331 mit den daran angeordneten oszillierenden Stanzwerkzeugen 332 der steuerbaren Stanzvorrichtung 33 (vgl. Fig. 3C) mit variabel steuerbarer Relativgeschwindigkeit zur Fördergeschwindigkeit 23 der transportierten Folie 22 rotierbar ist. Auf diese Weise können unterschiedliche Abstände der Aussparungen 62 voneinander realisiert werden. Hierzu kann bspw. ein Stanzzylinder des jeweiligen Stanzwerkzeuges 332 nicht immer synchron zur Folienbahn 22 ausfahren, wobei jedoch kurz vor dem Stanzvorgang der Stanzzylinder mit der Foliengeschwindigkeit 23 synchronisiert werden muss, was durch Abstimmung der durch den elektromotorischen Antrieb 333 steuerbaren Rotationsgeschwindigkeit 338 der Stanzwalze 331 auf die Foliengeschwindigkeit 23 erfolgt, wodurch die Umfangsgeschwindigkeit 338 der rotierenden Stanzwalze 331 weitgehend mit der Fördergeschwindigkeit 23 der Folienbahn 22 übereinstimmt. Diese Synchrongeschwindigkeit muss während des gesamten Stanzschnittes aufrecht erhalten bleiben. So ist insbesondere sicherzustellen, dass während jedes Stanzvorganges, bei dem das Stanzwerkzeug senkrecht zur Folienoberfläche in diese eintaucht, keine Geschwindigkeitsunterschiede zwischen der Umfangsgeschwindigkeit 338 der rotierenden Stanzwalze 331 und der Förder- oder Vorschubgeschwindigkeit 23 der Folienbahnen 22 herrschen, da ansonsten keine sauberen Stanzvorgänge zu gewährleisten sind. Diese Koppelung ist durch den Doppelpfeil in Fig. 4A zwischen der Fördergeschwindigkeit 23 der Folienbahn 22 und der Rotationsgeschwindigkeit 338 der Stanzwalze 331 kenntlich gemacht.

Jedes der in Fig. 4A gezeigten Lochpaare 631 mit Aussparungen 62 weist einen definierten Abstand 632 der beiden das Lochpaar 631 bildenden Aussparungen 62 auf, der den gegenüberliegenden Positionen der Tragegriffenden am Gebinde 24 entspricht. Da unterschiedliche Gebindegrößen sowie unterschiedliche Größen und/oder Höhen der zu Gebinden 24 zusammengefassten Artikel oder Behälter jeweils unterschiedliche Positionen der Aussparungen 62 und damit auch unterschiedliche Abstände 632 der Aussparungen 62 voneinander erfordern, können durch die oben beschriebene Abstimmung der Rotationsgeschwindigkeiten 338 der Stanzwalze 331 und der Fördergeschwindigkeiten 23 der Folienbahn 22 die gewünschten Lochmuster 63 mit den gewünschten Abständen 632 der einzelnen Aussparungen 62 jedes Lochpaares 631 hergestellt werden.

Da die Folienbahn 22 nach der Einbringung der benötigten Lochmuster 63 mittels der Folientrennstation 36 (vgl. Fig. 1) in einzelne Folienabschnitte zerteilt wird, sind auch die Abstände 633 der Lochpaare 631 voneinander variabel und so zu bemessen, dass diese Abstände 633 auf die jeweils benötigte Länge eines durch Abtrennung von der Endlos-Folienbahn 22 gebildeten einzelnen Folienabschnittes abgestimmt ist. Auch diese Abstände 633 der Lochpaare 631 sind in der beschriebenen Weise variierbar. Die Positionierung eines solchen Trennschnittes 634 ist in Fig. 4A schematisch angedeutet, wobei ungefähr mittig zwischen jedem Lochpaar 631 ein solcher Trennschnitt 634 durch die Folientrennstation 36 vorzunehmen ist.

Anhand der Fig. 4B wird derselbe Zusammenhang bei einer zweibahnigen Folienbahn 22 verdeutlicht, die nach Herstellung der Lochmuster 63 in zwei separate Bahnen unterteilt wird, was durch die Trennlinie 635 angedeutet ist, die parallel zur Längsrichtung der Folienbahn 22 und in etwa mittig zu den beiden Längsseiten der Bahn 22 verläuft. Dort wird die Folienbahn 22 in zwei getrennte Bahnen 22 zur Weiterleitung an zwei parallele Verpackungslinien unterteilt.

Außerdem wird anhand der Fig. 4C derselbe Zusammenhang bei einer dreibahnigen Folienbahn 22 verdeutlicht, die nach Herstellung der Lochmuster 63 in drei separate Bahnen unterteilt wird, was durch die beiden parallelen Trennlinien 635 angedeutet ist, die parallel zur Längsrichtung der Folienbahn 22 und in etwa mittig zwischen in Längsrichtung benachbarten Lochreihen der Bahn 22 verläuft. Dort wird die Folienbahn 22 in insgesamt drei getrennte Bahnen 22 zur Weiterleitung an drei parallele Verpackungslinien unterteilt.

Die Anzahl der jeweils erforderlichen Lochreihen ist abhängig von der späteren Verwendung (ein-, zwei- oder dreibahnige Verarbeitung in der Packmaschine 12). In jedem Fall muss die Lochung in einem exakten Abstand (quer zur Laufrichtung) erzeugt werden, wie dies anhand der Figuren 3C sowie 4A bis 4C im Detail erläutert wurde.

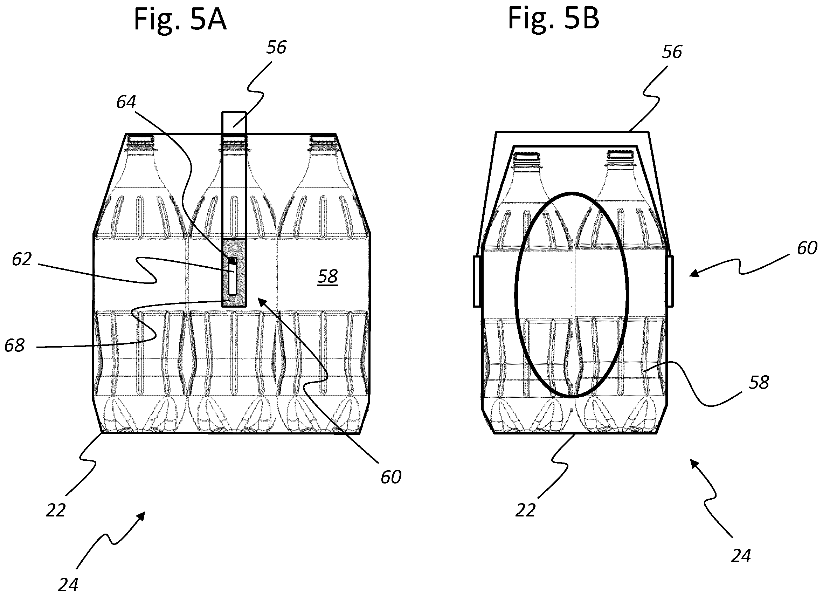

Die schematischen Seitenansichten der Figuren 5A und 5B zeigen beispielhaft eine Variante eines Gebindes 24 mit Tragegriff 56, das mit einer Vorrichtung 10 gemäß einer der zuvor beschriebenen Ausführungsvarianten hergestellt sein kann.

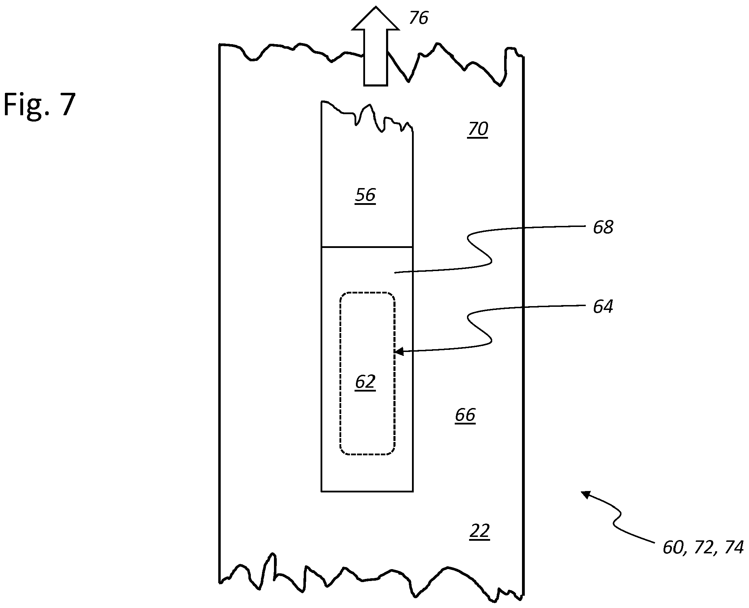

Das Gebinde 24 umfasst in der gezeigten Ausführungsvariante insgesamt sechs PET-Getränkebehälter 58, die in einer sog. Rechteckanordnung gruppiert und mit einer umhüllenden Einweg-Umverpackung in Gestalt einer Schrumpffolie 22, insbesondere einer PE-Schrumpffolie 22 zusammengehalten sind. Der Tragegriff 56 ist an definierten Kontaktstellen 60 an Außenseiten von wenigstens zwei gegenüber liegend angeordneten Getränkebehältern 58 des Gebindes 24 fixiert. Diese Kontaktstellen 60 decken sich gemäß der vorliegenden Erfindung zumindest teilweise mit Aussparungen 62 in der Umverpackung bzw. Folie 22, so dass die Kontaktstellen 60 im gezeigten Ausführungsbeispiel durch die Aussparungen 62 hindurchgreifen und die Ränder 64 der jeweiligen Aussparung 62 zumindest teilweise berühren, wie dies die vergrößerte Darstellung der Fig. 7 verdeutlicht.

Das an der Kontaktstelle 60 haftende, rechteckförmige und sich länglich in vertikaler Richtung entlang einer Mantelfläche 66 des Behälters 58 erstreckende Tragegriffende 68 überdeckt hierbei nicht nur die ebenfalls längliche Aussparung 62, sondern auch deren Randbereich 64 sowie einen Teil der den Rand 64 umgebenden Folienoberfläche 70 (vgl. Fig. 7), wobei jedoch aufgrund der sich in der Aussparung 62 konzentrierenden, eine Klebeverbindung 72 oder Schweißverbindung 74 aufweisenden Kontaktstelle 60 weitgehend der gesamte Kraftfluss direkt vom Tragegriff 56 durch die Aussparung 62 hindurch auf die Mantelfläche 66 des kontaktierten Behälters 58 stattfindet. Gleichzeitig wird die Folienoberfläche 70 und damit der die Kontaktstelle 60 umgebende Bereich der Umverpackung bzw. Schrumpffolie 22 von Zugkräften beim Tragen des Gebindes 24 entlastet, da die relativ kleine Kontaktfläche außerhalb des Randes 64 keine nennenswerten Zugkräfte 76 in die Umverpackung bzw. Folie 22 einleiten kann.

Wahlweise kann die Kontaktstelle 60 auch auf eine Weise ausgestaltet sein, dass sich die Klebeverbindung 72 oder Schweißverbindung 74 auf den Bereich bzw. die Flächenausdehnung der Aussparung 62 beschränkt, wogegen der Randbereich 64 und der Bereich außerhalb dieses Randes 64 keinen Klebstoff aufweist, wodurch die Folie 22 bzw. Umverpackung gänzlich von Zugkräften 76 freigehalten werden, die über den Tragegriff 56 aufgebracht werden.

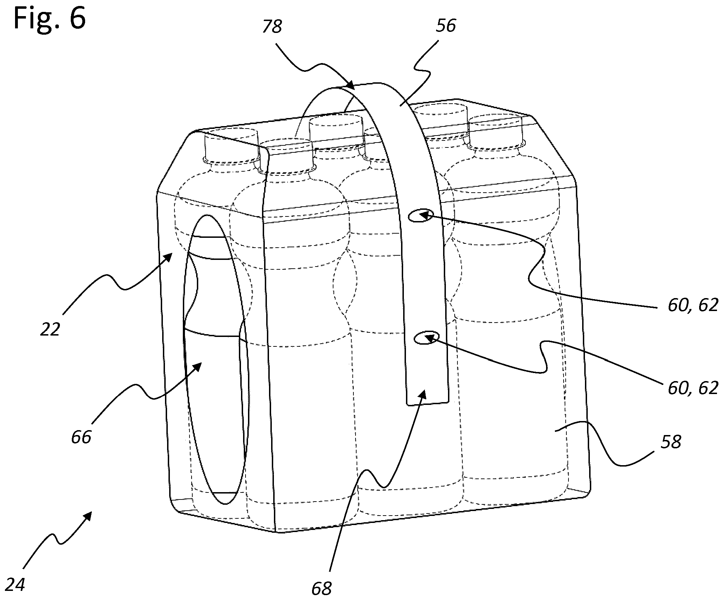

Die schematische Perspektivansicht der Fig. 6 zeigt eine weitere Ausführungsvariante des erfindungsgemäßen Gebindes 24 mit Tragegriff 56, der eine oberhalb der Gebindeoberseite befindliche Griffschlaufe 78 zum Tragen des Gebindes 24 ausbildet. Das Gebinde 24 umfasst auch bei dieser Variante insgesamt sechs Artikel in Form von PET-Getränkebehältern 58, die in einer sog. Rechteckanordnung gruppiert und mit einer umhüllenden Einweg-Umverpackung in Gestalt einer Schrumpffolie 22, insbesondere einer PE-Schrumpffolie 22 zusammengehalten sind. Der Tragegriff 56 ist an definierten Kontaktstellen 60 im Bereich von Außenseiten wenigstens zweier gegenüber liegend angeordneter Artikel bzw. Getränkebehälter 58 des Gebindes 24 fixiert.

Diese Kontaktstellen 60 beziehen gemäß einer Variante der Erfindung die Umverpackung mit ein, so dass die Tragegriffenden 68 auf die Außenseite der Umverpackung bzw. Folienumhüllung 22 appliziert sind. Die Kontaktstellen 60 decken sich jedoch zumindest teilweise mit den Aussparungen 62 in der Umverpackung bzw. Folie 22, so dass die Kontaktstellen 60 durch die Aussparungen 62 hindurchgreifen und die Ränder 64 der Aussparung 62 zumindest teilweise berühren, wie dies die vergrößerte Darstellung der Fig. 7 verdeutlicht. Dennoch sei mit Verweis auf die Fig. 6 darauf hingewiesen, dass der Tragegriff 56 bei dieser Variante zunächst auf die Folie 22 bzw. Umverpackung appliziert ist, auch wenn die Tragegriffenden 68 über geeignete Verbindungstechniken unter Durchdringung der Folie 22 oder Umverpackung haftend an die Behältermantelflächen 66 appliziert werden.

Das an der Kontaktstelle 60 haftende, rechteckförmige und sich länglich in vertikaler Richtung entlang der Mantelfläche 66 des Behälters 58 bzw. des Artikels erstreckende Tragegriffende 68 überdeckt hierbei sowohl vollständig die längliche oder punktuelle Aussparung 62 als auch deren Randbereich 64 sowie einen Teil der den Rand 64 umgebenden Folienoberfläche 70, wobei jedoch aufgrund der sich in der Aussparung 62 konzentrierenden, eine Klebeverbindung 72 und/oder Schweißverbindung 74 aufweisende Kontaktstelle 60 weitgehend der gesamte Kraftfluss direkt vom Tragegriff 56 durch die Aussparung 62 hindurch auf die Mantelfläche 66 des kontaktierten Artikels bzw. Behälters 58 stattfindet (vgl. Fig. 7). Gleichzeitig wird die Folienoberfläche 70 und damit der die Kontaktstelle 60 umgebende Bereich der Umverpackung bzw. Schrumpffolie 22 von Zugkräften 76 beim Tragen des Gebindes 24 entlastet, da die relativ kleine Kontaktfläche 60 außerhalb des Randes 64 keine nennenswerten Zugkräfte 76 in die Umverpackung bzw. Folie 22 einleitet.

Wahlweise kann die Kontaktstelle 60 auch auf eine Weise ausgestaltet sein, dass sich die Klebeverbindung 72 oder Schweißverbindung 74 auf den Bereich der Aussparung 62 beschränkt, wogegen der Randbereich 64 und der Bereich außerhalb dieses Randes 64 keinen Klebstoff aufweisen bzw. nicht mit verschweißt sind, wodurch die Folie 22 bzw. Umverpackung gänzlich von Zugkräften 76 freigehalten werden, die über den Tragegriff 56 aufgebracht werden.

Die in Fig. 6 gezeigte Variante des Gebindes 24 weist zwei übereinander angeordnete Aussparungen 62 mit entsprechenden Kontaktstellen 60 für die Tragegriffenden 68 auf. Die Kontaktstellen 60 können in der in Fig. 7 gezeigten Weise ausgestaltet sein. Diese mehreren Aussparungen 62 sind vertikal in einer Reihe übereinander angeordnet. Diese Aussparungen 62 bilden jeweils die Klebeverbindungen 72 oder Schweißverbindungen 74 zu den Mantelflächen 66 der Artikel bzw. Getränkebehälter 58, wobei die Klebeverbindungen 72 oder Schweißverbindungen 74 wahlweise in das auf der Folienoberfläche 70 im Bereich außerhalb der Ränder 64 aufliegende Tragegriffende 68 hineinreichen kann oder diese Bereiche von Klebstoff freigehalten sein können.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 10: Vorrichtung, Vorrichtung zur Herstellung von Gebinden mit Tragegriffen
- 12: Verpackungsmaschine
- 14: Transportstrecke
- 16: Artikelgruppe, Behältergruppe
- 18: Folieneinschlagmodul, Umhüllungsmodul
- 20: Folienvorrat, Endlos-Folienvorrat
- 22: Folie, Schrumpffolie, Umverpackung, Folienbahn
- 23: Foliengeschwindigkeit, Fördergeschwindigkeit, Vorschubgeschwindigkeit (der Folienbahn)
- 24: Gebinde, Foliengebinde, Schrumpfgebinde
- 26: Förderrichtung, Transportrichtung
- 28: Schrumpfmodul, Schrumpfofen
- 30: Applikationseinrichtung (zur Anbringung der Tragegriffe)
- 32: Schneidvorrichtung, Stanzvorrichtung, Lochungsvorrichtung
- 33: Stanzvorrichtung
- 331: Stanzwalze, rotierende Stanzwalze
- 332: Stanzwerkzeug, oszillierendes Stanzwerkzeug
- 333: Antrieb, elektromotorischer Antrieb (Stanzwalze)
- 334: Rahmen (Stanzvorrichtung)
- 335: Gegendruckwalze
- 336: Antrieb, elektromotorischer Antrieb (Gegendruckwalze)
- 337: Spindel-Formatverstellung
- 338: Rotationsgeschwindigkeit, Umfangsgeschwindigkeit (Stanzwalze)
- 34: Gebindetransportabschnitt
- 36: Folientrennstation
- 38: Folienrolle
- 40: Transportrichtung, Vorschubrichtung (der Folie)
- 42: Klinge, Schneidklinge
- 44: Stützeinrichtung
- 46: Schneidrichtung
- 48: Aufnahme- und/oder Sammeleinrichtung
- 50: Absaugeinrichtung
- 52: Mündungsöffnung
- 54: Absaugschlauch
- 56: Tragegriff
- 58: Behälter, Getränkebehälter, PET-Getränkebehälter
- 60: Kontaktstelle
- 62: Aussparung
- 63: Lochmuster (der Aussparungen)
- 631: Lochpaar, Aussparungspaar
- 632: Abstand (der Aussparungen jedes Lochpaars voneinander)
- 633: Abstand (der Lochpaare voneinander)
- 634: Trennschnitt
- 635: Trennlinie
- 64: Rand (der Aussparung), Randbereich
- 66: Mantelfläche, Behältermantelfläche, Artikelmantelfläche
- 68: Tragegriffende
- 70: Folienoberfläche
- 72: Klebeverbindung, Klebestelle
- 74: Schweißverbindung, Schweißstelle
- 76: Zugkraft
- 78: Griffschlaufe

## Patentansprüche

1. Vorrichtung (10) zur Herstellung von Gebinden (24) mit Tragegriffen (56), umfassend eine Transportstrecke (14) zur Beförderung von Artikelgruppen (16), ein Folieneinschlagmodul (18) zur zumindest teil- oder abschnittsweisen Umhüllung der Artikelgruppen (16) mit einer von einem Folienvorrat (20) zugeführten, dehn- und/oder unter Wärme schrumpfbaren Folie (22) zur Bildung von Foliengebinden (24), die mit Aussparungen (62) an wenigstens zwei gegenüber liegenden Seitenflächen der Gebinde (24) versehen sind, und mit einer Applikationseinrichtung (30) zur Aufbringung von Tragegriffen (56) unter Fixierung der Tragegriffenden (68) an Artikelmantelflächen (66) im Bereich der Aussparungen (62) mittels Klebe- und/oder Schweißverbindungen (72, 74) unter Durchdringung der schrumpfbaren Folie (22) und/oder unter Herstellung einer haftenden Verbindung mit der schrumpfbaren Folie (22),
wobei zwischen dem Folienvorrat (20) und dem Folieneinschlagmodul (18) eine steuerbare Schneid-, Stanz- und/oder Lochungsvorrichtung (32) zur Einbringung der Aussparungen (62) in die zum Folieneinschlagmodul (18) beförderte Folie (22) angeordnet ist, **dadurch gekennzeichnet, dass**
- der steuerbaren Schneid-, Stanz- und/oder Lochungsvorrichtung (32) eine Aufnahme- und/oder Sammeleinrichtung (48) zur Erfassung, Aufnahme und/oder zum Sammeln von herausgeschnittenen Folienabschnitten zugeordnet ist, wobei die Aufnahme- und/oder Sammeleinrichtung (48) eine der steuerbaren Schneid-, Stanz- und/oder Lochungsvorrichtung (32) zugeordnete Absaugeinrichtung (50) zur Erfassung und Beförderung der herausgeschnittenen Folienabschnitte aufweist,
- die steuerbare Schneid-, Stanz- und/oder Lochungsvorrichtung (32) durch eine bogenförmige Klinge (42) gebildet ist, die in etwa quer zur Transport- und/oder Vorschubrichtung (40) der Folie (22) bewegbar ist und bei der Einbringung der Aussparungen (62) Folienabschnitte herausschneidet, und
- eine Mündungsöffnung (52) eines Absaugschlauches (54) in Transport- bzw. Vorschubrichtung (40) der Folie (22) unmittelbar hinter der beweglichen Schneidklinge (42) der Schneid-, Stanz- und/oder Lochungsvorrichtung (32) angeordnet ist, so dass alle herausgeschnittenen Folienabschnitte zuverlässig angesaugt und von der Aufnahme- und/oder Sammeleinrichtung (48) aufgenommen und von der beförderten Folie (22) getrennt werden können.

2. Vorrichtung nach Anspruch 1, bei welcher die dem Folieneinschlagmodul (18) zugeführten Folienabschnitte (22) von einem Endlos-Folienvorrat (20) entnommen oder als einzelne Abschnitte definierter Länge befördert sind und vor ihrer Zuführung zum Folieneinschlagmodul (18) die Schneid-, Stanz- und/oder Lochungsvorrichtung (32) zum Einbringen der Aussparungen (62) durchlaufen.

3. Vorrichtung nach Anspruch 1 oder 2, bei der die steuerbare Schneid-, Stanz- und/oder Lochungsvorrichtung (32) mindestens eine Stanzvorrichtung mit oszillierendem oder rotierendem Stanzwerkzeug zur Einbringung der Aussparungen (62) in die Folienbahnen oder -abschnitte (22) umfasst, wobei insbesondere vorgesehen ist, dass das mindestens eine rotierende Stanzwerkzeug der steuerbaren Stanzvorrichtung (32) mit variabel steuerbarer Relativgeschwindigkeit zur Fördergeschwindigkeit der transportierten Folie (22) rotierbar ist.

4. Vorrichtung nach Anspruch 1 oder 2, bei der die steuerbare Schneid-, Stanz- und/oder Lochungsvorrichtung (32) mindestens eine Ultraschall-Sonotrode zum Einbringen der Aussparungen (62) in die Folienbahnen oder -abschnitte (22) umfasst.

5. Vorrichtung nach Anspruch 1 oder 2, bei der die steuerbare Schneid-, Stanz- und/oder Lochungsvorrichtung (32) mindestens eine Laserschneidvorrichtung zum Einbringen der Aussparungen (62) in die Folienbahnen oder -abschnitte (22) umfasst.

6. Vorrichtung nach einem der Ansprüche 1 bis 5, bei der die steuerbare Schneid-, Stanz- und/oder Lochungsvorrichtung (32) zur Herstellung der Aussparungen (62) im Förderprozess der Folie (22) in Querrichtung zur Transport- und/oder Vorschubrichtung (40) der Folie (22) bewegbar ist.

7. Vorrichtung nach einem der Ansprüche 1, 2 oder 6, bei der die steuerbare Schneid-, Stanz- und/oder Lochungsvorrichtung (32) einen Heizdraht umfasst, der die Klinge (42) bildet.

8. Vorrichtung nach einem der Ansprüche 1 bis 7, die mehrere parallele Transportstrecken (14), Folieneinschlagmodule (18) und jeweils diesen zugeordnete Schneid-, Stanz- und/oder Lochungsvorrichtung (32) zur Einbringung der Aussparungen (62) in jede der parallelen Folienbahnen (22) umfasst.

9. Vorrichtung nach einem der Ansprüche 1 bis 8, die ein dem Folieneinschlagmodul (18) nachgeordnetes oder diesem vorgeordnetes Applikationsmodul (30) zur Anbringung und Fixierung des Tragegriffs (56) an den Aussparungen (62) zugeordneten und/oder diese durchgreifenden Kontaktstellen (60) an Außenseiten der Umverpackungsfolie (22) aufweist, wobei insbesondere vorgesehen ist, dass das Applikationsmodul (30) zur Sicherstellung einer Positionierung der Tragegriffe (56) an den korrespondierenden Aussparungen (62) mit der steuerbaren Schneid-, Stanz- und/oder Lochungsvorrichtung (32) gekoppelt und/oder synchronisierbar ist.

10. Verfahren zur Herstellung von Gebinden (24) mit Tragegriff (56), bei dem in regelmäßiger und/oder ununterbrochener Folge für jedes herzustellende Gebinde (24) wenigstens zwei Artikel mittels einer Schrumpffolie (22), Banderole o. dgl. Umverpackung zumindest teilweise umhüllt und zusammengehalten und mechanisch aneinander fixiert und/oder zusammengefasst werden, wonach der Tragegriff (56) mittels Klebe- und/oder Schweißverbindungen (72, 74) an Kontaktstellen (60) an Mantelflächen (66) von wenigstens zwei unterschiedlichen Artikeln des Gebindes (24) fixiert wird, wobei sich die Kontaktstellen (60) zumindest teilweise mit Aussparungen (62) in der Umverpackung decken,
wobei die Aussparungen (62) während der Handhabung der Umverpackung, bei ihrem Transport zu einer Umhüllungsstation (18) oder einem Folieneinschlagmodul (18) und/oder bei der Zuführung der Umverpackung zu den zu umhüllenden Artikeln mittels einer steuerbaren Schneid-, Stanz- und/oder Lochungsvorrichtung (32) eingebracht werden, wobei herausgeschnittene Umverpackungsabschnitte von der Umverpackung getrennt und entfernt oder aufgenommen und gesammelt werden, **dadurch gekennzeichnet, dass**
- die herausgeschnittenen Umverpackungsabschnitte mittels Unterdruckes einer der steuerbaren Schneid-, Stanz- und/oder Lochungsvorrichtung (32) zugeordneten Absaugeinrichtung (50) erfasst und aufgenommen und/oder einer Sammelstelle zugeführt werden,
- die steuerbare Schneid-, Stanz- und/oder Lochungsvorrichtung (32) durch eine bogenförmige Klinge (42) gebildet ist, die in etwa quer zur Transport- und/oder Vorschubrichtung (40) der Umverpackung eintaucht und bei der Einbringung der Aussparungen (62) Umverpackungsabschnitte herausschneidet, und
- eine Mündungsöffnung (52) eines Absaugschlauches (54) in Transport- bzw. Vorschubrichtung (40) der Folie (22) unmittelbar hinter der beweglichen Schneidklinge (42) der Schneid-, Stanz- und/oder Lochungsvorrichtung (32) angeordnet ist, so dass alle herausgeschnittenen Folienabschnitte zuverlässig angesaugt und von der Aufnahme- und/oder Sammeleinrichtung (48) aufgenommen und von der beförderten Folie (22) getrennt werden können.

11. Verfahren nach Anspruch 10, bei dem die Umverpackung durch jeweils einen Schneidvorgang bzw. durch Schneidvorgänge mittels der steuerbaren Schneid-, Stanz- und/oder Lochungsvorrichtung (32) jeweils mit Aussparungen (62) versehen wird, wonach die Artikel mit der Umverpackung umhüllt werden und anschließend der Tragegriff (56) unter Kontaktierung der Aussparungen (62) auf die Mantelflächen (66) der Artikel appliziert wird.

12. Verfahren nach Anspruch 10 oder 11, bei dem die steuerbare Schneid-, Stanz- und/oder Lochungsvorrichtung (32) zur Herstellung der Aussparungen (62) im Förderprozess der Umverpackung in etwa quer zu deren Transport- und/oder Vorschubrichtung (40) eintaucht und die Aussparungen (62) herausstanzt oder herausschneidet.

13. Verfahren nach Anspruch 12, bei dem die Aussparungen (62) mittels einer Stanzvorrichtung mit oszillierendem oder rotierendem Stanzwerkzeug in die Folienbahnen oder -abschnitte (22) eingebracht werden, wobei insbesondere vorgesehen ist, dass das mindestens eine rotierende Stanzwerkzeug der steuerbaren Stanzvorrichtung (32) mit variabel steuerbarer Relativgeschwindigkeit zur Fördergeschwindigkeit der transportierten Folie (22) rotiert.

14. Verfahren nach Anspruch 10 oder 11, bei dem die Aussparungen (62) mittels mindestens einer Ultraschall-Sonotrode in die Folienbahnen oder -abschnitte (22) eingebracht werden.

15. Verfahren nach Anspruch 10 oder 11, bei dem die Aussparungen (62) mittels mindestens einer Laserschneidvorrichtung in die Folienbahnen oder -abschnitte (22) eingebracht werden.

16. Verfahren nach einem der Ansprüche 10 bis 13, bei dem die steuerbare Schneid-, Stanz- und/oder Lochungsvorrichtung (32) und/oder deren bewegliche Klinge (42) beheizbar ist und die Umverpackung während des Schneidens mit Hitze beaufschlagt.

17. Verfahren nach einem der Ansprüche 10 bis 16, bei dem eine der Umhüllungsstation (18) oder dem Folieneinschlagmodul (18) vorgeordnete Folientrennstation (36) zur Herstellung von abgelängten Folienbahnen (22) zur Umhüllung jeweiliger Artikelgruppen hinsichtlich der Steuerung der Folientrennung mit der steuerbaren Schneid-, Stanz- und/oder Lochungsvorrichtung (32) gekoppelt ist, insbesondere zur Abstimmung der Abstände der in die Folie (22) eingebrachten Aussparungen (62) und/oder zur Abstimmung einer exakten Folientrennposition.

18. Verfahren nach einem der Ansprüche 10 bis 17, bei dem eine der Umhüllungsstation (18) oder dem Folieneinschlagmodul (18) nachgeordnete oder vorgeordnete Applikationseinrichtung (30) zur Anbringung der Tragegriffe (56) hinsichtlich der Positionierung von Tragegriffenden (68) der Tragegriffe (56) an den Kontaktstellen (60) und/oder Aussparungen (62) der Gebinde (24) mit der steuerbaren Schneid-, Stanz- und/oder Lochungsvorrichtung (32) gekoppelt ist, insbesondere zur Abstimmung der Abstände der in die Folie (22) eingebrachten Aussparungen (62).

19. Verfahren nach einem der Ansprüche 10 bis 18, bei dem mehrere parallele Schneid-, Stanz- und/oder Lochungsvorrichtung (32) in mehrbahnigem Betrieb mehrerer parallel geförderter Umverpackungsbahnen eingesetzt werden.

20. Verfahren nach einem der Ansprüche 10 bis 19, bei dem sich die Kontaktstellen (60) zumindest teilweise mit Aussparungen (62) in der Umverpackung decken und die Umverpackung durchdringen und/oder durch diese hindurchgreifen, wobei insbesondere vorgesehen ist, dass sich an wenigstens einer der Kontaktstellen (60) die Klebe- und/oder Schweißverbindung (72, 74) auf die Umverpackung erstreckt und diese miteinbezieht.

21. Verfahren nach einem der Ansprüche 10 bis 20, bei dem die Artikel mittels eines Folieneinschlagmoduls (18) im Bereich einer Transportstrecke (14) in Förderrichtung (26) mit einer von einem Endlosvorrat (20) zur Verfügung gestellten Folie (22) umhüllt werden, so dass Gebinde (24) mit in Förderrichtung (26) seitlich angeordneten Aussparungen (62) an gegenüber liegenden Außenseiten gebildet werden, wonach die Gebinde (24) jeweils um ca. 90° oder 270° um eine Hochachse gedreht und der Tragegriff (56) unter Kontaktierung der mit Aussparungen (62) versehenen, in Förderrichtung (26) vorder- und rückseitig angeordneten Gebindeaußenseiten appliziert wird.

## Claims

1. An apparatus (10) for producing bundles (24) with carrying handles (56), the apparatus (10) comprising a transport path (14) for conveying article groups (16), a film wrapping module (18) for wrapping the article groups (16) at least partly or in some sections in a stretchable and/or heat-shrinkable film (22), which is fed from a film supply (20), in order to form film bundles (24), the film (22) whereof is provided with cut-outs (62) on at least two oppositely located lateral surfaces of the bundles (24), and with an application device (30) for applying carrying handles (56) by securing, by means of adhesive bonds and/or sealing bonds (72, 74), the carrying-handle ends (68) to the shell surfaces of the articles (66) in the area of the cut-outs (62) by way of penetrating the shrinkable film (22) and/or by way of producing an adhesive connection to the shrinkable film (22),
wherein a controllable cutting device, die-cutter device, and/or punch hole device (32) is arranged between the film supply (20) and the film wrapping module (18) for the purpose of making the cut-outs (62) in the film (22), which is conveyed to the film wrapping module (18), the apparatus (10) **characterised in that**
- a receptacle device and/or collector device (48) for seizing, receiving, and/or for collecting cut-out film sections is assigned to the controllable cutting device, die-cutter device, and/or punch hole device (32), wherein the receptacle device and/or collector device (48) has a suction device (50) for seizing and conveying the cut-out film sections, which suction device (50) is assigned to the controllable cutting device, die-cutter device, and/or punch hole device (32),
- the controllable cutting device, die-cutter device, and/or punch hole device (32) is formed by an arched blade (42), which is movable approximately transverse to the transport direction and/or feed direction (40) of the film (22), and which cuts out film sections when making the cut-outs (62), and
- an outlet opening (52) of a suction hose (54) is arranged in transport direction or, as applicable, in feed direction (40) of the film (22) immediately after the movable cutting blade (42) of the cutting device, die-cutter device, and/or punch hole device (32), such that all cut-out film sections can be reliably suctioned and received by the receptacle device and/or collector device (48) and separated from the conveyed film (22).

2. The apparatus according to claim 1, in which the lengths of film (22), which are fed to the film wrapping module (18), are taken from a continuous film supply (20) or are conveyed as individual sections of defined length and are passed through the cutting device, die-cutter device, and/or punch hole device (32) for the purpose of making the cut-outs (62) prior to the lengths of film (22) being fed to the film wrapping module (18).

3. The apparatus according to claim 1 or 2, in which the controllable cutting device, die-cutter device, and/or punch hole device (32) comprises at least one die-cutter device with an oscillating or rotating die-cutter tool for the purpose of making the cut-outs (62) in the film webs or in the lengths of film (22), wherein it is provided, in particular, that the at least one rotating die-cutter tool of the controllable die-cutter device (32) is rotatable at variably controllable relative speed in relation to the conveying speed of the transported film (22).

4. The apparatus according to claim 1 or 2, in which the controllable cutting device, die-cutter device, and/or punch hole device (32) comprises at least one ultrasonic sonotrode for the purpose of making the cut-outs (62) in the film webs or in the lengths of film (22).

5. The apparatus according to claim 1 or 2, in which the controllable cutting device, die-cutter device, and/or punch hole device (32) comprises at least one laser cutting device for the purpose of making the cut-outs (62) in the film webs or in the lengths of film (22).

6. The apparatus according to one of the claims 1 to 5, in which the controllable cutting device, die-cutter device, and/or punch hole device (32) is movable in transverse direction to the transport direction and/or feed direction (40) of the film (22) for the purpose of producing the cut-outs (62) during the conveying process of the film (22).

7. The apparatus according to one of the claims 1, 2, or 6, in which the controllable cutting device, die-cutter device, and/or punch hole device (32) comprises a heating wire, which forms the blade (42).

8. The apparatus according to one of the claims 1 to 7, which comprises a plurality of parallel transport paths (14), film wrapping modules (18), and, in each instance assigned thereto, cutting devices, die-cutter devices, and/or punch hole devices (32) for the purpose of making the cut-outs (62) in each of the parallel film webs (22).

9. The apparatus according to one of the claims 1 to 8, which has an application module (30), which is arranged downstream or upstream from the film wrapping module (18), for the purpose of attaching and securing the carrying handle (56) to contact points (60) on exteriors of the outer packaging film (22), which contact points (60) are assigned to and/or extend through the cut-outs (62), wherein it is provided, in particular, that the application module (30) is coupled and/or synchronisable with the controllable cutting device, die-cutter device, and/or punch hole device (32) to ensure a positioning of the carrying handles (56) at the corresponding cut-outs (62).

10. A method for producing bundles (24) with carrying handle (56), in which method, in regular and/or uninterrupted succession, at least two articles for each bundle (24) to be produced are at least partly wrapped and held together and mechanically secured to each other and/or gathered together by means of a shrink film (22), sleeve, or the like outer packaging, whereupon the carrying handle (56) is secured by means of adhesive bonds and/or sealing bonds (72, 74) to contact points (60) on shell surfaces (66) of at least two different articles of the bundle (24), wherein the contact points (60) at least partly coincide with cut-outs (62) in the outer packaging,
wherein the cut-outs (62) are made by means of a controllable cutting device, die-cutter device, and/or punch hole device (32) during the handling of the outer packaging, the transport of the outer packaging to a wrapping station (18) or to a film wrapping module (18), and/or during the feeding of the outer packaging to the articles to be wrapped, wherein cut-out sections of outer packaging are separated from the outer packaging and removed or received and collected, the method **characterised in that**
- the cut-out sections of outer packaging are seized and received and/or fed to a collection point by means of negative pressure of a suction device (50) assigned to the controllable cutting device, die-cutter device, and/or punch hole device (32),
- the controllable cutting device, die-cutter device, and/or punch hole device (32) is formed by an arched blade (42), which dips in approximately transverse to the transport direction and/or feed direction (40) of the outer packaging, and which cuts out sections of outer packaging when making the cut-outs (62), and
- an outlet opening (52) of a suction hose (54) is arranged in transport direction or, as applicable, in feed direction (40) of the film (22) immediately after the movable cutting blade (42) of the cutting device, die-cutter device, and/or punch hole device (32), such that all cut-out film sections can be reliably suctioned and received by the receptacle device and/or collector device (48) and separated from the conveyed film (22).

11. The method according to claim 10, in which the outer packaging is provided in each instance with cut-outs (62) by in each instance one cutting process or, as applicable, by cutting processes, by means of the controllable cutting device, die-cutter device, and/or punch hole device (32), whereupon the articles are wrapped in the outer packaging, and the carrying handle (56) is subsequently applied onto the shell surfaces (66) of the articles under contact with the cut-outs (62).

12. The method according to claim 10 or 11, in which, for the purpose of making the cut-outs (62), the controllable cutting device, die-cutter device, and/or punch hole device (32) dips in approximately transverse to the transport direction and/or feed direction (40) of the outer packaging during the conveying process of the outer packaging and punches out or cuts out the cut-outs (62).

13. The method according to claim 12, in which the cut-outs (62) are made in the film webs or in the lengths of film (22) by means of a die-cutter device with an oscillating or rotating die-cutter tool, wherein it is provided, in particular, that the at least one rotating die-cutter tool of the controllable die-cutter device (32) rotates at variably controllable relative speed in relation to the conveying speed of the transported film (22).

14. The method according to claim 10 or 11, in which the cut-outs (62) are made in the film webs or in the lengths of film (22) by means of at least one ultrasonic sonotrode.

15. The method according to claim 10 or 11, in which the cut-outs (62) are made in the film webs or in the lengths of film (22) by means of at least one laser cutting device.

16. The method according to one of the claims 10 to 13, in which the controllable cutting device, die-cutter device, and/or punch hole device (32), and/or the movable blade (42) thereof is heatable and applies heat to the outer packaging during the cutting process.

17. The method according to one of the claims 10 to 16, in which a film separating station (36), which is arranged upstream from the wrapping station (18) or from the film wrapping module (18), is coupled with the controllable cutting device, die-cutter device, and/or punch hole device (32) in terms of the control of the film separation for the purpose of producing the cut-to-length film webs (22) for wrapping the particular article groups, in particular, for the purpose of adjusting the spaces between the cut-outs (62) made in the film (22) and/or for the purpose of adjusting a precise film separation position.

18. The method according to one of the claims 10 to 17, in which an application device (30), which is arranged downstream or upstream from the wrapping station (18) or from the film wrapping module (18), is coupled with the controllable cutting device, die-cutter device, and/or punch hole device (32) in terms of the positioning of carrying-handle ends (68) of the carrying handles (56) at the contact points (60) and/or at the cut-outs (62) of the bundles (24) for the purpose of attaching the carrying handles (56), in particular, for the purpose of adjusting the spaces between the cut-outs (62) made in the film (22).

19. The method according to one of the claims 10 to 18, in which a plurality of parallel cutting devices, die-cutter devices, and/or punch hole devices (32) are employed in multi-lane operation of a plurality of parallel conveyed outer packaging webs.

20. The method according to one of the claims 10 to 19, in which the contact points (60) at least partly coincide with cut-outs (62) in the outer packaging and penetrate and/or extend through the outer packaging, wherein it is provided, in particular, that the adhesive bond and/or sealing bond (72, 74) extends onto and includes the outer packaging at least at one of the contact points (60).

21. The method according to one of the claims 10 to 20, in which the articles are wrapped in conveying direction (26) in a film (22) provided from a continuous supply (20) by means of a film wrapping module (18) in the area of a transport path (14), such that bundles (24) are formed with cut-outs (62) arranged laterally in conveying direction (26) at oppositely disposed outer sides, whereupon the bundles (24) are in each instance rotated about a vertical axis by approximately 90° or 270°, and the carrying handle (56) is applied under contact with the bundle outer sides, which are provided with cut-outs (62) arranged at the front and back in conveying direction (26).

## Revendications

1. Dispositif (10) de production de multipacks (24) à poignées de transport (56), comprenant une section de transport (14) pour transporter des groupes d'articles (16), un module d'enveloppement de film (18) pour envelopper au moins en partie ou par sections les groupes d'articles (16) d'un film (22) expansible et/ou thermorétractable amené depuis une réserve de film (20) afin de former des multipacks enveloppés de film (24) qui sont pourvus d'évidements (62) sur au moins deux faces latérales opposées des multipacks (24), et avec un dispositif d'application (30) pour appliquer des poignées de transport (56) tout en fixant les extrémités de poignée de transport (68) sur des surfaces latérales d'article (66) au niveau des évidements (62) au moyen de joints collés et/ou soudés (72, 74) tout en pénétrant le film (22) rétractable et/ou en réalisant une liaison adhésive avec le film (22) rétractable,
dans lequel un dispositif de découpe, de poinçonnage et/ou de perforation (32) commandable et destiné à ménager les évidements (62) dans le film (22) transporté vers le module d'enveloppement de film (18) est disposé entre la réserve de film (20) et le module d'enveloppement de film (18), **caractérisé par le fait que**
- audit dispositif de découpe, de poinçonnage et/ou de perforation (32) commandable est associé un dispositif de réception et/ou de collecte (48) pour saisir, recevoir et/ou collecter des tronçons de film découpés, dans lequel ledit dispositif de réception et/ou de collecte (48) comprend un dispositif d'aspiration (50) associé au dispositif de découpe, de poinçonnage et/ou de perforation (32) commandable et destiné à saisir et à transporter les tronçons de film découpés,
- le dispositif de découpe, de poinçonnage et/ou de perforation (32) commandable est constitué par une lame en arc (42) qui peut être déplacée à peu près transversalement à la direction de transport et/ou d'avance (40) du film (22) et qui découpe des tronçons de film lorsque les évidements (62) sont ménagés, et
- une ouverture de bouche (52) d'un tuyau flexible d'aspiration (54) est disposée, dans la direction de transport ou bien d'avance (40) du film (22), immédiatement derrière la lame de coupe (42) mobile du dispositif de découpe, de poinçonnage et/ou de perforation (32) de sorte que tous les tronçons de film découpés peuvent être aspirés de manière fiable et être reçus par le dispositif de réception et/ou de collecte (48) et être séparés du film (22) transporté.

2. Dispositif selon la revendication 1, dans lequel les tronçons de film (22) amenés au module d'enveloppement de film (18) sont retirés d'une réserve de film sans fin (20) ou transportés en tant que tronçons individuels de longueur définie et passent à travers le dispositif de découpe, de poinçonnage et/ou de perforation (32) pour ménager les évidements (62), avant qu'ils soient amenés au module d'enveloppement de film (18).

3. Dispositif selon la revendication 1 ou 2, dans lequel le dispositif de découpe, de poinçonnage et/ou de perforation (32) commandable comprend au moins un dispositif de poinçonnage ayant un outil de poinçonnage oscillant ou rotatif pour ménager les évidements (62) dans les bandes ou tronçons de film (22), dans lequel, en particulier, il est prévu que ledit au moins un outil de poinçonnage rotatif du dispositif de poinçonnage (32) commandable peut être tourné à une vitesse relative commandable de manière variable par rapport à la vitesse de transport du film (22) transporté.

4. Dispositif selon la revendication 1 ou 2, dans lequel le dispositif de découpe, de poinçonnage et/ou perforation (32) commandable comprend au moins une sonotrode à ultrasons pour ménager les évidements (62) dans les bandes ou tronçons de film (22).

5. Dispositif selon la revendication 1 ou 2, dans lequel le dispositif de découpe, de poinçonnage et/ou de perforation (32) commandable comprend au moins un dispositif de découpe au laser pour ménager les évidements (62) dans les bandes ou tronçons de film (22).

6. Dispositif selon l'une quelconque des revendications 1 à 5, dans lequel, pour ménager les évidements (62) lors du processus de transport du film (22), le dispositif de découpe, de poinçonnage et/ou de perforation (32) commandable peut être déplacé dans la direction transversale à la direction de transport et/ou d'avance (40) du film (22).

7. Dispositif selon l'une quelconque des revendications 1, 2 ou 6, dans lequel le dispositif de découpe, de poinçonnage et/ou perforation (32) commandable comprend un fil chauffant qui forme la lame (42).

8. Dispositif selon l'une quelconque des revendications 1 à 7, qui comprend une pluralité de sections de transport (14) parallèles, de modules d'enveloppement de film (18) ainsi que des dispositifs de découpe, de poinçonnage et/ou de perforation (32) associés respectivement à ceux-ci et destinés à ménager les évidements (62) dans chacun des bandes de film (22) parallèles.

9. Dispositif selon l'une quelconque des revendications 1 à 8, qui comprend un module d'application (30) qui est disposé en aval du module d'enveloppement de film (30) ou en amont de celui-ci et destiné à appliquer et à fixer la poignée de transport (56) sur des points de contact (60) situés sur des faces extérieures du film d'emballage supplémentaire (22) et associés aux évidements (62) et/ou traversant ceux-ci, dans lequel, en particulier, il est prévu que, pour assurer un positionnement des poignées de transport (56) sur les évidements (62) correspondants, le module d'application (30) est couplé au et/ou peut être synchronisé avec le dispositif de découpe, de poinçonnage et/ou de perforation (32) commandable.

10. Procédé de réalisation de multipacks (24) ayant une poignée de transport (56), dans lequel, dans une séquence régulière et/ou ininterrompue pour chaque multipack (24) à produire, au moins deux articles (14) sont enveloppés au moins en partie et maintenus ensemble au moyen d'un film rétractable (22), d'une banderole ou d'un emballage supplémentaire similaire et sont fixés mécaniquement entre eux et/ou assemblés, ce après quoi la poignée de transport (56) est fixée au moyen de joints collés et/ou soudés (72, 74) sur des points de contact (60) situés sur des surfaces latérales (66) d'au moins deux articles différents du multipack (24), dans lequel les points de contact (60) coïncident au moins en partie avec des évidements (62) existant dans l'emballage supplémentaire,
dans lequel les évidements (62) sont ménagés lors de la manipulation de l'emballage supplémentaire, pendant son transport vers un poste d'enveloppement (18) ou un module d'enveloppement de film (18) et/ou lorsque l'emballage supplémentaire est amené aux articles à envelopper, au moyen d'un dispositif de découpe, de poinçonnage et/ou de perforation (32), dans lequel des tronçons d'emballage supplémentaire découpés sont séparés et retirés de l'emballage supplémentaire ou reçus et collectés, **caractérisé par le fait que**
- les tronçons d'emballage supplémentaire découpés sont saisis et reçus au moyen de la dépression d'un dispositif d'aspiration (50) associé au dispositif de découpe, de poinçonnage et/ou de perforation (32) commandable, et/ou sont amenés à un point de collecte,
- le dispositif de découpe, de poinçonnage et/ou de perforation (32) commandable est formé par une lame en arc (42) qui plonge à peu près transversalement à la direction de transport et/ou d'avance (40) de l'emballage supplémentaire et découpe des tronçons d'emballage supplémentaire lorsque les évidements (62) sont ménagés, et
- une ouverture de bouche (52) d'un tuyau flexible d'aspiration (54) est disposée, dans la direction de transport ou bien d'avance (40) du film (22), immédiatement derrière la lame de coupe (42) mobile du dispositif de découpe, de poinçonnage et/ou de perforation (32) de sorte que tous les tronçons de film découpés peuvent être aspirés de manière fiable et être reçus par le dispositif de réception et/ou de collecte (48) et être séparés du film (22) transporté.

11. Procédé selon la revendication 10, dans lequel l'emballage supplémentaire est pourvu respectivement d'évidements (62) par respectivement une opération de coupe ou bien par des opérations de coupe au moyen du dispositif de découpe, de poinçonnage et/ou de perforation (32) commandable, ce après quoi les articles sont enveloppés de l'emballage supplémentaire et puis la poignée de transport (56) est appliquée sur les surfaces latérales (66) des articles tout en entrant en contact avec les évidements (62).

12. Procédé selon la revendication 10 ou 11, dans lequel le dispositif de découpe, de poinçonnage et/ou de perforation (32) commandable destiné à réaliser les évidements (62) dans le processus de transport de l'emballage supplémentaire plonge à peu près transversalement à la direction de transport et/ou d'avance (40) de celui-ci et poinçonne ou découpe les évidements (62).

13. Procédé selon la revendication 12, dans lequel les évidements (62) sont ménagés dans les bandes ou tronçons de film (22) au moyen d'un dispositif de poinçonnage ayant un outil de poinçonnage oscillant ou rotatif, dans lequel, en particulier, il est prévu que ledit au moins un outil de poinçonnage rotatif du dispositif de poinçonnage (32) commandable tourne à une vitesse relative commandable de manière variable par rapport à la vitesse de transport du film (22) transporté.

14. Procédé selon la revendication 10 ou 11, dans lequel les évidements (62) sont ménagés dans les bandes ou tronçons de film (22) au moyen d'au moins une sonotrode à ultrasons.

15. Procédé selon la revendication 10 ou 11, dans lequel les évidements (62) sont ménagés dans les bandes ou tronçons de film (22) au moyen d'au moins un dispositif de découpe au laser.

16. Procédé selon l'une quelconque des revendications 10 à 13, dans lequel le dispositif de découpe, de poinçonnage et/ou de perforation (32) commandable et/ou la lame (42) mobile de celui-ci peut être chauffé et amène de la chaleur à l'emballage supplémentaire lors de la découpe.

17. Procédé selon l'une quelconque des revendications 10 à 16, dans lequel un poste de séparation de film (36) disposé en amont du poste d'enveloppement (18) ou du module d'enveloppement de film (18) et destiné à produire des bandes de film (22) coupées à longueur pour envelopper des groupes d'articles respectifs est couplé au dispositif de découpe, de poinçonnage et/ou de perforation (32) commandable en ce qui concerne la commande de la séparation de film, en particulier pour adapter les distances entre les évidements (62) ménagés dans le film (22) et/ou pour adapter une position exacte de séparation de film.

18. Procédé selon l'une quelconque des revendications 10 à 17, dans lequel un dispositif d'application (30) disposé en aval ou en amont du poste d'enveloppement (18) ou du module d'enveloppement de film (18) et destiné à appliquer les poignées de transport (56) est couplé au dispositif de découpe, de poinçonnage et/ou de perforation (32) commandable en ce qui concerne le positionnement d'extrémités de poignée de transport (68) des poignées de transport (56) au niveau des points de contact (60) et/ou des évidements (62) des multipacks (24), en particulier pour adapter les distances entre les évidements (62) ménagés dans le film (22).

19. Procédé selon l'une quelconque des revendications 10 à 18, dans lequel une pluralité de dispositifs parallèles de découpe, de poinçonnage et/ou de perforation (32) est utilisée en fonctionnement à plusieurs bandes d'une pluralité de bandes d'emballage supplémentaire transportées en parallèle.

20. Procédé selon l'une quelconque des revendications 10 à 19, dans lequel les points de contact (60) coïncident au moins en partie avec des évidements (62) dans l'emballage supplémentaire et pénètrent l'emballage supplémentaire et/ou passent à travers celui-ci, dans lequel, en particulier, il est prévu que le joint collé et/ou soudé (72, 74) s'étend, sur au moins l'un des points de contact (60), sur l'emballage supplémentaire et inclut celui-ci.

21. Procédé selon l'une quelconque des revendications 10 à 20, dans lequel les articles sont enveloppés au moyen d'un module d'enveloppement de film (18), au niveau d'une section de transport (14), dans la direction de transport (26), d'un film (22) provenant d'une réserve sans fin (20) de sorte que des multipacks (24) ayant des évidements (62) disposés latéralement dans la direction de transport (26), sur des faces extérieures opposées, sont réalisés, ce après quoi les multipacks (24) sont chacun tournés de 90° ou 270° à peu près autour d'un axe vertical et la poignée de transport (56) est appliquée tout en entrant en contact avec les faces extérieures de multipack qui sont pourvues d'évidements (62) et disposées à l'avant et à l'arrière dans la direction de transport (26).
